# EUROPÄISCHE PATENTSCHRIFT

(11) **EP 2 389 286 B1**
(45) Veröffentlichungstag und Bekanntmachung des Hinweises auf die Patenterteilung: **19.02.2014**
(21) Anmeldenummer: 10805221.8
(22) Anmeldetag: 02.12.2010
(51) Int. Cl.: B29C 67/00, B22F 3/105

(54) **BAUBEREICHSBEGRENZUNG EINER RAPID-PROTOTYPING-ANLAGE**
DELIMITATION OF THE CONSTRUCTION AREA IN A RAPID-PROTOTYPING SYSTEM
DÉLIMITATION DE ZONE DE CONSTRUCTION D'UNE INSTALLATION DE PROTOTYPAGE RAPIDE

(30) Priorität: 02.12.2009 DE 102009056686
(43) Veröffentlichungstag der Anmeldung: 30.11.2011
(73) Patentinhaber: Exone GmbH, 86167 Augsburg (DE)
(72) Erfinder: HÖCHSMANN, Rainer, 86863 Langenneufnach (DE); MÜLLER, Alexander, 86343 Königsbrunn (DE)
(74) Vertreter: Viering, Jentschura & Partner
(86) Internationale Anmeldenummer: PCT/EP2010/068779
(87) Internationale Veröffentlichungsnummer: WO 2011/067359

(56) Entgegenhaltungen:
- EP-A2- 1 704 989
- WO-A1-2007/003244
- DE-U1-202004 018 586

## Beschreibung

Die vorliegende Erfindung betrifft eine Anlage zum schichtweisen Aufbau eines Formkörpers durch Ausbilden übereinander liegender Schichten von Baumaterial auf einem Baufeld und durch selektives Verfestigen eines Teilbereichs der jeweiligen Baumaterial-Schicht vor dem Ausbilden der nächstfolgenden Schicht gemäß dem Oberbegriff des Anspruchs 1.

Eine derartige Anlage (z.B. eine sog. Rapid-Prototyping-Anlage) kann z.B. einen horizontal verfahrbaren Beschichter aufweisen, mit dem gleichmäßige Schichten aus dem zu verfestigendem Baumaterial, z.B. ein Partikelmaterial oder ein Gemisch enthaltend Partikelmaterial, in mehrfacher Wiederholung auf das Baufeld aufgebracht werden können, wozu der Beschichter horizontal über das Baufeld hin verfahrbar ist.

Die jeweilige Schicht wird nach ihrer Aufbringung in einem selektiven Teilbereich verfestigt, so dass der Formkörper aus den selektiv verfestigten Teilbereichen aufgebaut wird. Zur selektiven Verfestigung des Teilbereichs der jeweiligen Baumaterial-Schicht kann z.B. eine Druckvorrichtung mit einem entlang eines Druckkopf-Trägers in einer ersten Horizontalrichtung verfahrbaren Druckkopf eingesetzt werden, wobei der Druckkopf-Träger selbst in einer zweiten Horizontalrichtung verfahrbar ist, so dass der Druckkopf über das gesamte Baufeld hin verfahrbar ist. Der Druckkopf weist eine Mehrzahl von Düsen auf, durch die ein geeignetes fließfähiges, insbesondere flüssiges Behandlungsmittel (wie beispielsweise ein Bindemittel, z.B. ein Harz), das zu der selektiven Verfestigung des Teilbereichs beiträgt, gesteuert auf die selektiv zu verfestigende Schicht aufgegeben/aufgedruckt werden kann. Eine Alternative zu einem derartigen Druckverfahren stellt das sog. Lasersintern dar, bei dem die selektive Verfestigung des Teilbereichs der jeweiligen Schicht durch gezielte Einfuhr von Wärme mittels eines Lasers erfolgt.

Das Baufeld, auf welches die einzelnen Baumaterial-Schichten aus dem Beschichter in mehrfacher Wiederholung aufgebracht werden, kann z.B. von einer höhenverstellbaren Bauplattform gebildet sein, welche in dem Innenraum einer nach oben offenen Baubox aufgenommen ist. Zu Beginn eines Bauprozesses zum Aufbauen eines Formkörpers ist die Bauplattform nach oben gefahren. Auf die nach oben gefahrene Bauplattform wird mittels des Beschichters eine erste Baumaterial-Schicht aufgebracht und anschließend z.B. vermittels einer Druckvorrichtung in einem vorbestimmten Teilbereich selektiv verfestigt. Nachdem die erste Baumaterial-Schicht selektiv verfestigt wurde, wird die Bauplattform um eine Schichtdicke abgesenkt, woraufhin mittels des Beschichters eine zweite Baumaterial-Schicht auf die Bauplattform bzw. auf die zuvor selektiv verfestigte erste Baumaterial-Schicht aufgebracht wird. Anschließend wird die zweite Baumaterial-Schicht selektiv verfestigt, und die Bauplattform wird erneut um eine Schichtdicke abgesenkt. Diese Schritte werden solange wiederholt, bis der Formkörper aus den selektiv verfestigten Schichten hergestellt ist. Der Baubereich, in dem der Formkörper hergestellt/aufgebaut wird, wird somit von dem Innenraum der Baubox sowie der Bauplattform begrenzt. Zum Entpacken des fertiggestellten Formkörpers kann die Bauplattform einfach wieder nach oben gefahren werden, so dass der Formkörper aus dem losen, nicht verfestigten Baumaterial entnommen werden kann.

Da die Bauplattform während des Bauprozesses schrittweise um eine Schichtdicke abgesenkt wird, bevor eine neue Schicht auf die zuvor verfestigte Schicht aufgebracht wird, kann der vertikale Abstand von dem Beschichter und von der Druckvorrichtung (oder alternativ von einem Laser) gegenüber dem Baufeld bzw, der obersten Baumaterial-Schicht konstant gehalten werden, was das Aufbringen und das Verfestigen der Schichten erleichtert.

Als eine Alternative hierzu sind im Stand der Technik Verfahren/Vorrichtungen bekannt, bei denen die Bauplattform nicht bewegt wird, d.h. während des Bauprozesses stationär ist, und der Beschichter sowie die Druckvorrichtung schrittweise angehoben werden, um den Vertikalabstand zwischen Beschichter/Druckvorrichtung und Baufeld konstant zu halten.

Die Baubox, in der die Bauplattform aufgenommen ist, ist zum Aufbauen des Formkörpers in dem Rahmen/Baurahmen der Anlage angeordnet und insbesondere an diesem fixiert (=Baubox-Bauposition). In der Baubox-Bauposition wird das Baufeld bzw. der Baubereich von einer sog. horizontalen Baubereichsabdeckung oder horizontalen Baubereichsbegrenzung in der Art eines Rahmens zumindest teilweise, bevorzugt vollständig umfangsseitig umgeben. Z.B. wird hierzu im Stand der Technik eine anlagenfeste, an dem Baurahmen der Anlage befestigte horizontale rahmenförmige Baubereichsbegrenzung verwendet. Die horizontale Baubereichsbegrenzung ist in einer Höhe angeordnet, die deutlich größer ist als die Höhe der Baubox, so dass die Baubox zu Beginn des Bauprozesses problemlos in die Baubox-Bauposition und unter die horizontale rahmenförmige Baubereichsbegrenzung gefahren werden kann. Anschließend wird die gesamte Baubox um einen Betrag angehoben, der der Differenz zwischen der Höhe der horizontalen Baubereichsabgrenzung und der Höhe der Baubox entspricht, so dass der obere Rand der Baubox auf Höhe der horizontalen Baubereichsbegrenzung ist und von dieser umfangsseitig umgeben wird. Sodann wird mittels des Beschichters auf die nach oben gefahrene Bauplattform die erste Baumaterial-Schicht aufgebracht. Überschüssiges Baumaterial wird während des Bauprozesses auf der Baubereichsabdeckung bzw. Baubereichsbegrenzung angesammelt. Ein zwischen Baubox bzw. Bauboxwand und Baubereichsbegrenzung ausgebildeter Raum in Form eines Horizontalspalts wird idR durch Vorsehen einer Dichtung abgedichtet.

Das Dokument EP 1 704 989 A2 offenbart eine Anlage gemäß dem Oberbegriff des Anspruchs 1.

Alternativ ist es im Stand der Technik bekannt, die Seitenwand bzw. Begrenzungswand für das herzustellende Bauteil gemeinsam mit dem herzustellenden Bauteil während dessen Aufbau aufzubauen.

Es ist eine Aufgabe der Erfindung, eine Anlage zum schichtweisen Aufbau eines Formkörpers bereitzustellen, bei der der von der Baubox (bzw. über der Bauplattform) gebildete Baubereich einfach und effizient abdichtbar ist. Mit anderen Worten soll auf einfache und effiziente Weise eine Dichtung zwischen der Baubox und einer Baubereichsbegrenzung, welche den Baubereich zumindest teilweise umgibt, ausgebildet werden.

Hierzu stellt die Erfindung eine Anlage zum schichtweisen Aufbau eines Formkörpers nach Anspruch 1 bereit, und mehr spezifisch aufweisend eine Baubox und eine erste anlagenfeste Begrenzungsplatte. Die Baubox hat eine Vorderwand, eine Rückwand und zwei Seitenwände, welche zusammen einen nach oben offenen Bauboxinnenraum begrenzen. Zum Beispiel ist die Baubox in der Draufsicht rechteckig ausgebildet, z.B. mit langen Seitenwänden, einer kurzen Vorderwand und einer kurzen Rückwand. In dem von den vertikalen Bauboxwänden gebildeten Bauboxinnenraum ist eine höhenverstellbare Bauplattform aufgenommen. Der Bauboxinnenraum definiert über der Bauplattform einen Baubereich, in dem der Formkörper aufgebaut werden kann, wenn sich die Baubox in ihrer Bauposition befindet, d.h. wenn die Baubox zum Aufbauen des Formkörpers in dem Baurahmen der Anlage angeordnet und insbesondere an diesem fixiert ist.

Die erste anlagenfeste Begrenzungsplatte hat eine horizontale Oberseite, von welcher in der Baubox-Bauposition entlang einer ersten Bauboxwand, z.B. entlang einer der beiden Seitenwände, eine den Baubereich teilweise umfangsseitig umgebende Baubereichsbegrenzung gebildet wird. Die horizontale Oberseite der Begrenzungsplatte erstreckt sich dabei insbesondere senkrecht zu der vertikalen ersten Bauboxwand und zwar entlang des oberen Randbereichs der ersten Bauboxwand. Z.B. ist die Begrenzungsplatte an dem Baurahmen der Anlage befestigt. Z.B. hat die horizontale Oberseite der ersten Begrenzungsplatte eine langgestreckte Streifenform.

Die erste Bauboxwand hat im Bereich ihres oberen Randes eine horizontale Randfläche. Z.B. hat die horizontale Randfläche eine langgestreckte Streifenform. Die horizontale Randfläche kann z.B. von dem oberen Stirnrand der ersten Bauboxwand ausgebildet sein, d.h. einstückig mit der Bauboxwand, oder von einer an der Bauboxwand in dem Bereich des oberen Rands, z.B. an der Außenseite der Bauboxwand, angebrachten horizontalen Randflächenplatte ausgebildet sein. Wenn die Baubox in der Baubox-Bauposition angeordnet ist, wird die horizontale Randfläche von der ersten Begrenzungsplatte derart zumindest teilweise überlappt/übergriffen, dass zwischen der Unterseite der Begrenzungsplatte und der horizontalen Randfläche ein Spalt gebildet ist. Die horizontale Randfläche wird von der ersten Begrenzungsplatte lediglich teilweise überlappt/übergriffen. Der Spalt ist derart dimensioniert, dass außerhalb des Baubereichs eingebrachtes, überschüssiges Baumaterial sich in dem Spalt totläuft. Mit anderen Worten wird von dem Spalt eine Schüttkegeldichtung bzw. Labyrinthdichtung ausgebildet. D.h., von dem Baumaterial, welches in den Spalt eindringt und Partikelmaterial aufweist, wird an dem inneren Spaltende, welches einen Baumaterial-Eintrittsbereich formt (= der dem Baufeld zugewandte Bereich des Spalts), ein Schüttkegel ausgebildet, der in Richtung zu dem äußeren Spaltende hin abfällt und vor dem äußeren Spaltende endet/zum Stehen kommt. Die Breite der Randfläche kann größer sein als die Dicke der Bauboxwand.

Somit kann auf einfache aber dennoch effiziente Weise eine Abdichtung zwischen der Baubereichsbegrenzung, welche erfindungsgemäß zumindest teilweise durch die erste anlagenfeste Begrenzungsplatte gebildet wird, und der Baubox bereitgestellt werden.

Zudem kann die Aufbauhöhe (= Höhe des Baufeldes bzw. der obersten Schicht) und folglich die Höhe der Anlage bzw. des Baugehäuses mit der vorliegenden Erfindung reduziert werden, da beispielsweise die horizontale Oberseite der ersten anlagenfesten Begrenzungsplatte in einer Höhe montiert sein kann, die lediglich um denjenigen Betrag größer ist als die Höhe der Baubox, der sich zusammensetzt aus der Spalthöhe und der Dicke der Begrenzungsplatte und ggf. aus der Höhe eines Schienensystems, auf dem die Baubox steht und entlang dem die Baubox in die Baubox-Bauposition und aus dieser herausgefahren werden kann. Die vorliegende Erfindung ist somit insbesondere für eine verfahrbar ausgebildete Baubox geeignet, die z.B. zwischen der Baubox-Bauposition und einer zusätzlichen Position verfahrbar ist, wie z.B. einer Entpackungsposition, in der die Baubox außerhalb des Baurahmens angeordnet ist und in der der hergestellte Formkörper ausgepackt werden kann. Die Baubox kann z.B. einfach mit ihrer horizontalen Randfläche unter die Begrenzungsplatte horizontal in die Bauposition hinein gefahren werden, wobei nach einer Fixierung der Baubox an dem Baurahmen der Anlage unmittelbar mit dem Bauprozess begonnen werden kann, da sich Dichtung zwischen horizontaler Randfläche und Begrenzungsplatte automatisch, d.h. von selbst, ausgebildet wird, sobald Partikelmaterial aus dem Beschichter auf das Baufeld ausgegeben wird. Am Ende eines Bauprozesses kann die Baubox unmittelbar nach dem Lösen der Fixierung einfach aus der Bauposition herausgefahren werden. Somit kann mit der vorliegenden Erfindung auch diejenige Zeit eingespart werden, die im Stand der Technik für ein Anheben und Absenken der Baubox vor und nach dem Bauprozess aufgebracht werden muss.

Daher ist die Baubox gemäß einer vorteilhaften Ausführungsform der Erfindung verfahrbar ausgebildet.

Hierzu kann die Baubox z.B. einen eigenen Baubox-Fahrantrieb zum Verfahren der Baubox zwischen der Baubox-Bauposition und einer zusätzlichen Position aufweisen. Der Baubox-Fahrantrieb kann zum Beispiel ein an der Baubox befestigtes Zahnrad aufweisen, das von einem in die Baubox integrierten Fahrmotor antreibbar ist. Das Zahnrad, welches z.B. an der Bauboxunterseite angebracht ist und z.B. eine vertikale oder horizontale Radebene aufweisen kann, kann z.B. mit einer Zahnstange eines Schienensystems zusammenwirken, entlang dem die Baubox verfahrbar ist. Das Zahnrad greift in die Zahnstange ein, die bei horizontaler Radebene des Zahnrades seitlich einer Fahrschiene an dieser angeordnet sein kann, und rollt auf der zahnstange ab, wenn es von dem Fahrmotor angetrieben wird, so dass die Baubox entlang der Zahnstange verfahrbar ist. Die Baubox kann dabei z.B. über eine Schleppkette elektrisch mit der Anlage in Verbindung stehen, z.B. mit einer zentralen Steuereinrichtung und/oder einer zentralen Stromversorgung der Anlage. Gemäß einer alternativen Ausführungsform kann die Baubox aber auch manuell verfahrbar sein, z.B. mit Rollen oder Rädern versehen sein oder auf einer Rollenbahn der Anlage verschiebbar sein.

Ferner kann die Baubox seitliche Führungsrollen aufweisen, welche z.B. an der Unterseite der Baubox befestigt sind, und welche sich auf entsprechenden Führungsschienen eines Schienensystems seitlich abrollen. Dadurch kann eine Zentrierung der Baubox in/entlang einer Horizontalrichtung senkrecht zur Fahrtrichtung erfolgen, so dass die Baubox gezielt in die Bauposition und mit der Randfläche unter die Begrenzungsplatte gefahren werden kann. Diese Ausführungsform eignet sich sowohl für eine selbst fahrende Baubox als auch für eine manuell verfahrbare oder extern angetriebene Baubox. Ferner kann die Baubox an ihrer Unterseite ein Paar von Gleit- oder Rollkufen aufweisen, mit denen die Baubox auf einem Paar von Schienen des Schienensystems gleitend oder rollend aufliegt. Die Kufen können z.B. auf Rollen des Schienensystems abrollen oder z.B. auf entsprechenden Gleitflächen des Schienensystems gleiten.

Zur Zentrierung und Fixierung der Baubox in der Bauposition kann die Anlage ein Bauboxfixierungssystem zum Ausrichten der Baubox in/entlang der Baubox-Fahrtrichtung und zum Fixieren der Baubox an dem Baurahmen aufweisen. Das Bauboxfixierungssystem weist ein anlagenseitiges horizontal verstellbares Ausrichtelement mit einem sich verjüngenden Endabschnitt (z.B. einen Ausrichtdorn) sowie eine bauboxseitige sich verjüngende Vertiefung (z.B. eine konusförmige Vertiefung) auf, welche an einer der Bauboxwände ausgebildet ist und in welche der sich verjüngende Endabschnitt das anlagenseitigen Ausrichtelements in der Baubox-Bauposition eingreift. Zudem kann das Bauboxfixierungssystem ein anlagenseitiges Fixierelement (z.B. einen Bolzen) mit einem flach ausgebildeten Endabschnitt aufweisen, der gegen ein an der Bauboxwand angebrachtes Anschlagplättchen verstellbar drückbar ist. Als Gegenlager kann beispielsweise ein Schienensystem auf der gegenüberliegenden Bauboxseite dienen. Ferner kann das Bauboxfixierungssystem einen Sensor aufweisen zum Ermitteln der Position der Baubox, insbesondere, ob die Baubox sich in der Bauposition befindet. Hierzu kann an der Baubox ein Sensor-Zielobjekt angebracht sein. Ferner kann das Bauboxfixierungssystem ein Steuersystem aufweisen, welches einen Antrieb des Ausrichtelements und des Fixierelements derart ansteuert, dass das Ausrichtelement in die Ausrichtvertiefung einfährt und das Fixierelement gegen das Anschlagplättchen gedrückt wird, wenn der Sensor detektiert, dass die Baubox in der Bauposition ist.

Gemäß einer Ausführungsform der Erfindung kann eine zweite anlagenfeste Begrenzungsplatte vorgesehen sein, die mit einer horizontalen Randfläche einer zweiten Bauboxwand eine Schüttkegel-Labyrinthdichtung der oben beschriebenen Art ausbildet.

Die jeweilige mit der Randfläche versehene Bauboxwand, d.h. die erste und/oder zweite Bauboxwand, kann im Bereich ihres oberen Randes ferner eine Stufe aufweisen, welche in der Baubox-Bauposition in horizontaler Richtung zwischen der Randfläche und dem Baubereich angeordnet ist und welche mit ihrer Oberseite gegenüber der Randfläche eine erhöhte Horizontalfläche ausbildet. Die Stufe kann im Querschnitt z.B. rechteckig oder quadratisch ausgebildet sein. Die von der Stufe gebildete erhöhte Horizontalfläche ist insbesondere in Höhe der Oberseite der Begrenzungsplatte angeordnet. Mit Hilfe dieser Stufe kann der Schüttkegel, der sich in dem jeweiligen Spalt ausbildet, genau/definiert eingestellt werden. Ferner haben die Erfinder erkannt, dass sich durch Anbringung/Ausbildung der Stufe eine sog. "Rissbildung" in dem Pulverbett während des Absenkens der Bauplattform verhindern oder zumindest stark reduzieren lässt. Eine solche "Abrisskante" kann im Stand der Technik auftreten, wenn die Bauplattform vor dem Aufbringen einer nächsten Schicht um eine Schichtdicke abgesenkt wird. Die Vermeidung einer solchen Abrisskante ist damit zu erklären, dass durch Vorsehen der Stufe eine Art Barriere oder Trennwand zwischen dem Ort der Abdichtung und der Bauboxinnenwand geschaffen wird.

Bevorzugt liegt hierbei die Oberseite der Stufe in gleicher Höhe wie die obere freie Stirnfläche der Bauboxwand, so dass die freie Stirnfläche in gleicher Höhe wie die obere Fläche der Begrenzungsplatte liegt. Die horizontale Randfläche verläuft hierbei um einen Betrag tiefer als die Oberseite der Begrenzungsplatte, welcher der Summe der Dicke der Begrenzungsplatte und der Spalthöhe entspricht. Bei dieser Ausführungsform kann die Stufe in der freien oberen Stirnfläche der Bauboxwand ausgebildet sein. Es ist jedoch auch möglich, an der Außenseite der Bauboxwand eine abstehende Randplatte vorzusehen, von deren Oberseite die Randfläche ausgebildet wird, so dass von der freien oberen Stirnfläche der Bauboxwand die obere Fläche der Stufe gebildet wird.

Bevorzugt sind genau zwei anlagenfeste Begrenzungsplatten vorgesehen, wobei die erste anlagenfeste Begrenzungsplatte und die zweite anlagenfeste Begrenzungsplatte beidseitig des Raums für die Baubox gegenüberliegend angeordnet sind. Jedoch ist es auch möglich, drei anlagenfeste Begrenzungsplatten vorzusehen. Bevorzugt wird mindestens eine Seite des Baufeldes offen gelassen, d.h. nicht mit einer Begrenzungsplatte versehen, so dass die Baubox seitlich in das Baufeld bzw. die Bauposition hineingefahren werden kann. Wenn die Baubox als stationärer Baubehälter ausgebildet ist, kann aber auch eine vierte anlagenfeste Begrenzungsplatte an der vierten Bauboxseite vorgesehen sein, so dass ein anlagenfester geschlossener Begrenzungsrahmen gebildet ist. Auch ist es möglich, lediglich eine anlagenfeste Begrenzungsplatte vorzusehen, z.B. zusammen mit drei Abdeckungsplatten der unten beschriebenen Art.

Die beiden anlagenfesten Begrenzungsplatten erstrecken sich bevorzugt senkrecht zu der horizontalen Bewegungsrichtung des Beschichters, insbesondere des Beschichter-Trägers, und/oder der Druckvorrichtung, insbesondere des Druckkopf-Trägers. Mit anderen Worten verläuft die Längsachse des Beschichter-Trägers und/oder des Druckkopf-Trägers parallel zu den Begrenzungsplatten, so dass der Beschichter und die Druckkopfvorrichtung über die jeweilige anlagenseitige Begrenzungsplatte hinweg aus dem Baufeld heraus verfahrbar sind.

Zum Beispiel kann die Baubox eine horizontale erste Abdeckungsplatte aufweisen, von welcher entlang einer (dritten) Bauboxwand, die benachbart zu der ersten Bauboxwand angeordnet ist, eine den Baubereich teilweise umfangsseitig umgebende Baubereichsbegrenzung gebildet wird. Das heißt, gemäß dieser Ausführungsform der Erfindung wird die Baubereichsbegrenzung bzw. Baubereichsabdeckung teilweise von der Baubox selbst ausgebildet. In der Baubox-Bauposition befindet sich die Abdeckungsplatte der Baubox dabei auf der gleichen Höhe wie die jeweilige anlagenseitige Begrenzungsplatte und grenzt an diese an. Zum Beispiel kann die Baubox eine horizontale zweite Abdeckungsplatte aufweisen, wobei die erste und die zweite Abdeckungsplatte einander gegenüberliegen. Wenn die Baubox mit ihrer Vorderwand voran in die Bauposition gefahren wird, ist die mindestens eine Abdeckungsplatte bevorzugt an der Rückseite der Baubox angeordnet.

Die Erfindung wird im Folgenden anhand verschiedener Ausführungsformen mit Bezugnahme auf die Zeichnung näher erläutert. In der Zeichnung zeigen:
Figur 1 eine Perspektivansicht auf die vordere Stirnseite einer erfindungsgemäßen **Anlage 100** zum schichtweisen Aufbau eines Formköpers gemäß einer ersten Ausführungsform der Erfindung,
Figur 2 eine zweite Perspektivansicht der erfindungsgemäßen Anlage aus Fig. 1,
Figur 3 eine dritte Perspektivansicht der Anlage aus Fig. 1, wobei das Gehäuse der Anlage weggelassen ist,
Figur 4 eine vierte Perspektivansicht der Anlage aus Fig. 1, wobei das Gehäuse der Anlage weggelassen ist,
Figur 5 eine fünfte Perspektivansicht der Anlage aus Fig. 1, wobei das Gehäuse der Anlage weggelassen ist,
Figur 6 eine Perspektivansicht einer erfindungsgemäßen Anlage zum schichtweisen Aufbau eines Formköpers gemäß einer zweiten Ausführungsform der Erfindung,
Figur 7 eine Perspektivansicht auf die vordere Stirnseite und eine benachbarte Seitenwand einer erfindungsgemäßen **Baubox 200,**
Figur 8 die Ansicht aus Figur 7, wobei die Verkleidungswand an der vorderen Stirnseite weggelassen ist, um den Fahrantrieb und den Hubantrieb der Baubox zu zeigen,
Figur 9 eine Perspektivansicht auf die vordere Stirnseite der Baubox aus den Figuren 7 und 8, wobei die Baubox auf dem Schienensystem der Anlage angeordnet ist und wobei die Baubox in die Entpackungsposition gefahren ist,
Figur 10 eine Perspektivansicht auf die vordere Stirnseite sowie eine weitere Seitenwand der Baubox, welche der in Figur 7 gezeigten Seitenwand abgewandt ist,
Figur 11 eine Perspektivansicht des Anlagenrahmens und der daran angebrachten Komponenten des Bauboxfixierungssystems, Figur 12 eine Frontalansicht auf die vordere Stirnseite der Baubox, wobei sich die Baubox in der Bauposition befindet und an dem Anlagenrahmen fixiert ist,
Figur 13 eine Perspektivansicht auf die Oberseite der Baubox bzw. auf die darin aufgenommene Bauplattform, wobei sich die Baubox in der Bauposition befindet,
Figur 14 eine Detailansicht der anlagenfesten Baufeldabdeckung, welche sich unter Ausbildung einer Labyrinthdichtung entlang einer Seitenwand der Baubox erstreckt,
Figur 15 eine Detailansicht der zwischen der anlagenfesten Baufeldabdeckung und der Baubox ausgebildeten Labyrinthdichtung,
die Figuren 16 und 17 jeweils eine Perspektivansicht einer erfindungsgemäßen **Mischvorrichtung 300,**
Figur 18 eine Perspektivansicht auf die vordere Stirnseite eines erfindungsgemäßen **Beschichters 400,** wobei der Beschichter in seiner Betriebsposition ist, d.h. der Dosierschacht und der Vorlagebehälter des Beschichters sind jeweils an dem Beschichter-Träger befestigt,
Figur 19 eine Perspektivansicht des Beschichters aus Fig. 18 von vorne, wobei der Vorlagebehälter des Beschichters von dem Beschichter-Träger weg in eine Reinigungsposition geschwenkt ist, um z.B. die Verteilerschnecke des Vorlagebehälters zu reinigen,
Figur 20 eine Perspektivansicht des Beschichters aus Fig. 18 von hinten, wobei der Vorlagebehälter des Beschichters zusammen mit dem Zuführtrichter in eine Reinigungsposition geschwenkt ist, um z.B. die Zuführöffnung des Dosierschachts zu reinigen,
Figur 21 eine Perspektivansicht des Beschichters aus Fig. 18, wobei der Beschichter in die Anlage eingebaut ist und in seiner Betriebsposition ist und wobei die vordere Stirnwand der einzelnen Beschichter-Komponenten weggelassen ist,
Figur 22 eine Perspektivansicht einer erfindungsgemäßen **Druckvorrichtung 500,** welche einen Druckkopfträger und einen daran aufgehängten Druckkopf aufweist,
Figur 23 eine Detailansicht des Druckkopfes aus Fig. 22 und dessen Aufhängung an dem Druckkopfträger,
Figur 23a eine schematische Unteransicht des Druckkopfkopfes, um die Anordnung der Druckkopfdüsen zu veranschaulichen,
Figur 24 eine Perspektivansicht einer erfindungsgemäßen **Beschichter-Reinigungsvorrichtung 600,**
Figur 25 eine Perspektivansicht der Beschichter-Reinigungsvorrichtung aus Figur 24 und des Beschichters,
Figur 26 eine Perspektivansicht auf eine Seitenwand des Anlagengehäuses,
Figur 27 eine Perspektivansicht von dem horizontal verfahrbaren Druckkopf in seiner Ruhe- bzw. Parkposition und von einer benachbart zu dem Druckkopf angeordneten erfindungsgemäßen **Druckkopf-Reinigungsvorrichtung 700,** welche gemäß der gezeigten Ausführungsform zwei seitlich nebeneinander angeordnete Wischlippen aufweist,
Figur 28 eine Perspektivansicht der Druckkopf-Reinigungsvorrichtung aus Figur 27, wobei sich die zwei Wischlippen in der Druckkopf-Reinigungsposition befinden,
Figur 29 eine Perspektivansicht der Druckkopf-Reinigungsvorrichtung aus Figur 27, wobei sich die zwei Wischlippen in der Wischlippen-Regenerationsposition befinden, und
die Figuren 30a bis 30f verschiedene Ausführungsformen der erfindungsgemäßen Druckkopf-Reinigungsvorrichtung.

### Anlage 100

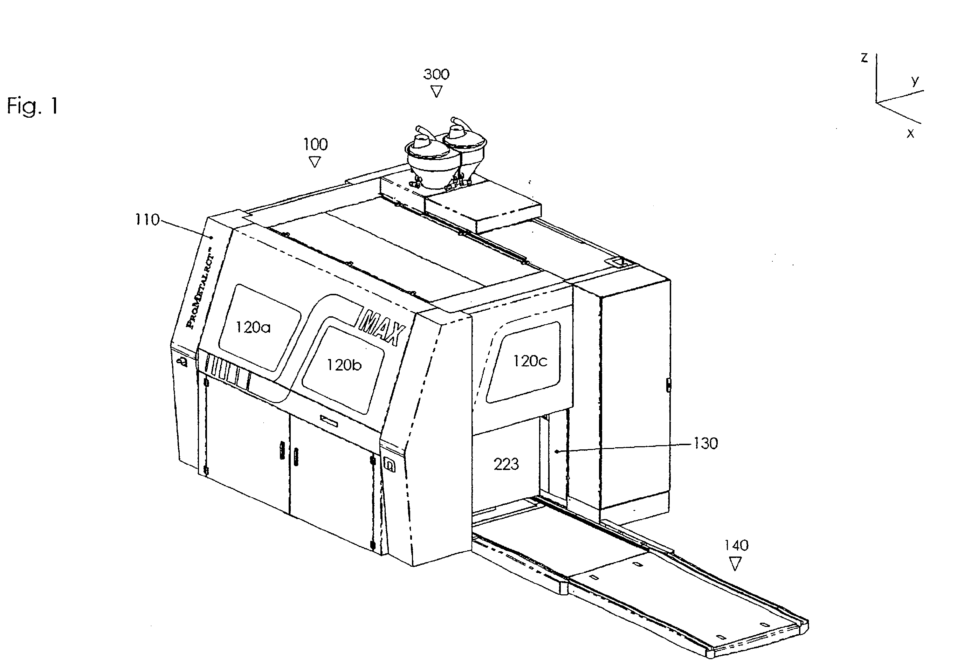

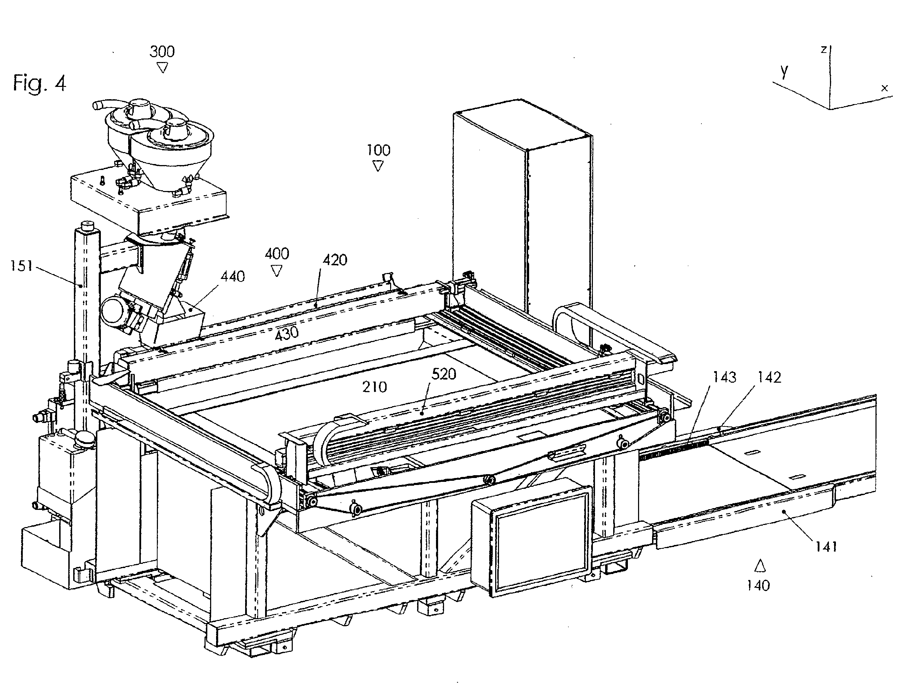

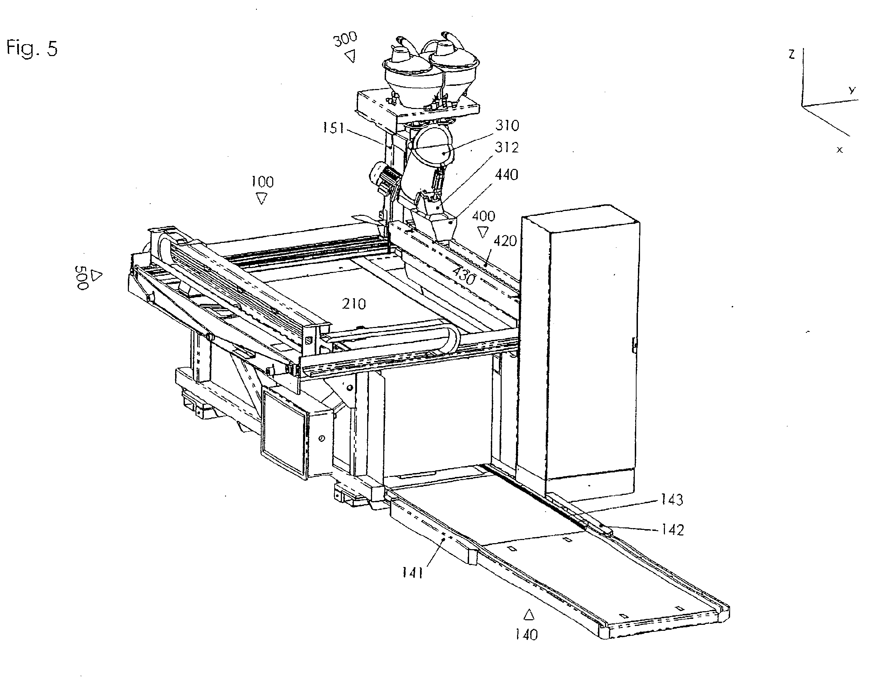

Die **Figuren 1 bis 5** zeigen eine Rapid-Prototyping-Anlage 100 gemäß einer ersten Ausführungsform der Erfindung, welche zum selektiven verfestigen der Baumaterial-Schichten mit einer Druckvorrichtung ausgestattet ist. An dieser Stelle wird angemerkt, dass die meisten Komponenten der Anlage 100 auch auf andere Rapid-Prototyping-Anlagen anwendbar sind. Zum Beispiel können die Baubox 200, die Mischvorrichtung 300, der Beschichter 400 und die Beschichter-Reinigungsvorrichtung 600 problemlos, ggf. mit geringfügigen Modifikationen, in einer Anlage zum Lasersintern eingesetzt werden. Mit anderen Worten kann die Anlage 100 z.B. zu einer Laser-Sinter-Anlage umgerüstet werden, indem der Druckkopf 500 durch eine Strahlungsquelle bzw. einen Laser ersetzt wird.

Mit der Anlage 100 kann ein Formkörper, z.B. eine Gussform, unmittelbar aus zuvor generierten CAD-Daten hergestellt werden durch Ausbilden von übereinander liegenden Baumaterialschichten und durch selektives Verfestigen von Teilbereichen der jeweiligen Baumaterialschicht vor dem Ausbilden der nächsten Schicht.

Der Formkörper bzw. die Baumaterialschichten werden auf einer Bauplattform 210 einer Baubox 200 aufgebaut. Die Bauplattform 210 ist höhenverstellbar und kann vor dem Auftragen einer neuen Baumaterialschicht um eine Schichtdicke abgesenkt werden, so dass die Arbeitsebene (= oberste Baumaterialschicht) stets auf dem selbem Niveau ist.

Das Baumaterial weist Partikelmaterial auf. Als Partikelmaterial kann zum Beispiel Sand eingesetzt werden, insbesondere ein Sand wie er üblicherweise in der Gießereitechnik verwendet wird. Das Aufbringen der jeweiligen Baumaterialschicht erfolgt mit einem Beschichter 400, der horizontal über die Bauplattform 210 hin verfahrbar ist. Der Beschichter 400 wird über eine Mischvorrichtung 300 mit Baumaterial gespeist.

Zur selektiven Verfestigung der jeweiligen Baumaterialschicht wird eine Druckvorrichtung 500 mit einem horizontal verfahrbaren Druckkopf 510 eingesetzt, mit dem ein geeignetes Bindemittel auf die zu verfestigende Schicht aufgegeben/aufgedruckt werden kann, wozu der Druckkopf 510 mäanderförmig über die Baumaterialschicht hinweg gefahren wird. Das Partikelmaterial "verklebt" bzw. verfestigt das Partikelmaterial selektiv. Als Bindemittel kann z.B. ein Harz eingesetzt werden, z.B. Furanharz. Zudem ist es möglich, ein Mehrkomponentenbindemittel zu verwenden, wobei eine erste Bindemittel-Komponente (z.B. das Harz) über den Druckkopf 510 aufgedruckt wird, und wobei eine zweite Bindemittel-Komponente (z.B. ein Aktivator oder Härter) mit dem Partikelmaterial vermengt ist. Das durch den Drucker selektiv aufgedruckte Harz reagiert mit dem in der obersten Sandschicht vorliegenden Härter, wodurch das Harz aushärtet und dadurch einzelne Sandkörner miteinander verbindet/verklebt. Zudem wird durch das aushärtende Harz der zu verfestigende Abschnitt der obersten Schicht mit dem zu verfestigenden Abschnitt der unmittelbar unter der oberen Schicht angeordneten Schicht verbunden.

Vereinfacht wiedergegeben kann ein Formteil demnach z.B. wie folgt ausgebildet werden:
1. Bereitstellen einer Baumaterialmischung, enthaltend Formsand und Härter, unter Verwendung des Mischers 300,
2. Chargenweiser/Schichtweiser Auftrag des Baumaterials auf die Bauplattform 210 des Baubehälters 200 mit Hilfe des Beschichters 400,
3. Eindosieren von Harz in die oberste Baumaterialschicht unter Verwendung der Druckvorrichtung 500
4. und Wiederholen der Schritte 2 und 3, bis der Formkörper fertiggestellt ist.

Der Beschichter 400 und die Druckvorrichtung 500 sind in einem Gehäuse 110 untergebracht, in dem der oben beschriebene Bauprozess abläuft. Das Gehäuse 110 weist Fenster 120a-120d auf zum Beobachten des Prozessablaufs. Ferner weist das Gehäuse 110 eine stirnseitige Baubox-Einfahr/Ausfahr-Öffnung 130 auf, durch welche die Baubox 200 in das Gehäuse 110 hinein und aus diesem heraus gefahren werden kann. Wie aus Figur 1 ersichtlich ist, wird die Baubox-Einfahr/Ausfahr-Öffnung 130 durch eine hintere Stirnwand/Verkleidungswand 223 der Baubox 200 geschlossen, wenn die Baubox 200 in der Bauposition fixiert ist. Mit anderen Worten bildet die Baubox 200 in der Bauposition einen Teil der Anlagenverkleidung, so dass keine zusätzliche Tür oder Schutzvorrichtung notwendig ist.

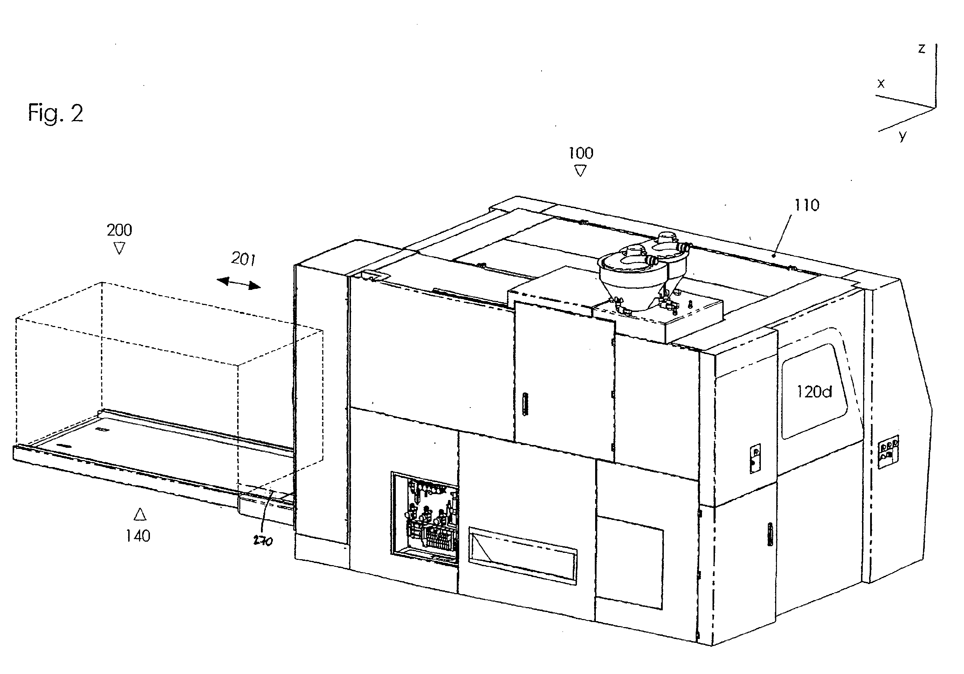

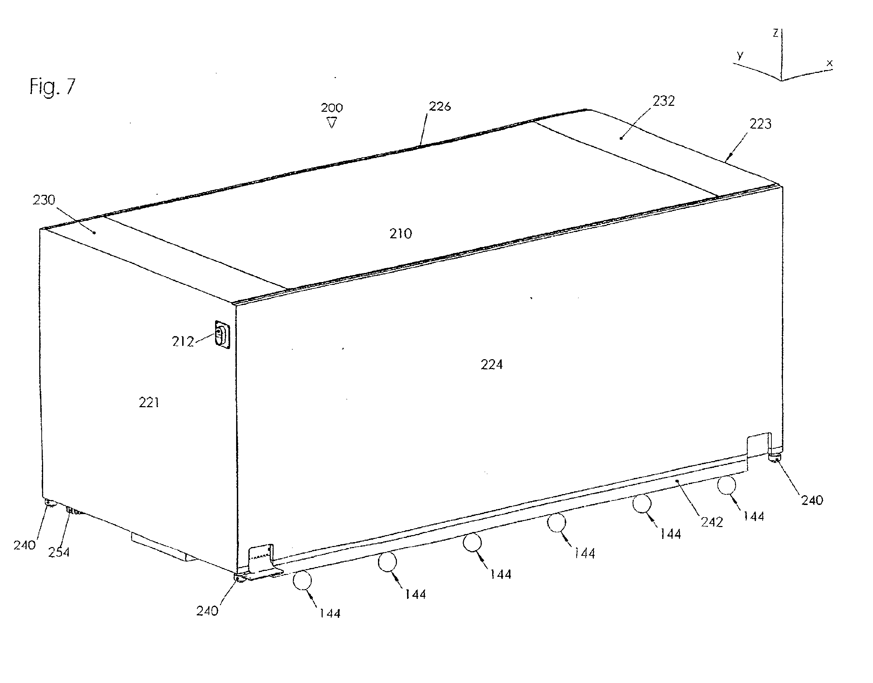

Nach Fertigstellung des Formköpers wird die Baubox 200 aus dem Gehäuse 110 heraus in die in Figur 2 durch gestrichelte Linien angedeutete Entpackungsposition gefahren. D.h., die Baubox 200 ist in Richtung des Pfeils 201 zwischen einer Bauposition und einer Entpackungsposition verfahrbar (siehe Figur 2). In der Entpackungsposition kann der fertige Formkörper ausgepackt und freigelegt werden, z.B. durch Anheben bzw. nach oben Fahren der Bauplattform 210 und durch Wegblasen oder Absaugen des losen, nicht verfestigten Formsands. Das Anheben bzw. Absenken der Bauplattform 210 in der Entpackungsposition kann automatisiert erfolgen oder manuell über einen Druckknopf 212 gesteuert werden (siehe Figur 7). Anschließend wird der Formkörper z.B. per Hand entnommen und ggf. einer abschließenden Reinigung unterzogen, wie z.B. einem Abbürsten. Daraufhin ist die Baubox 200 frei und kann erneut in das Gehäuse 110 bzw. in ihre Bauposition gefahren werden, so dass der nächste Baujob ausgeführt werden kann.

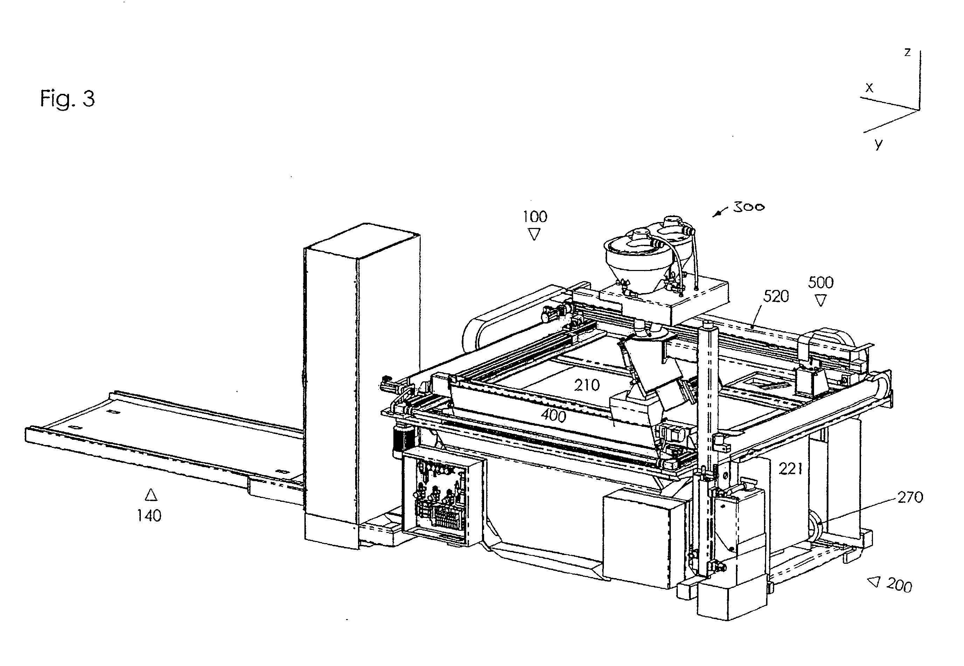

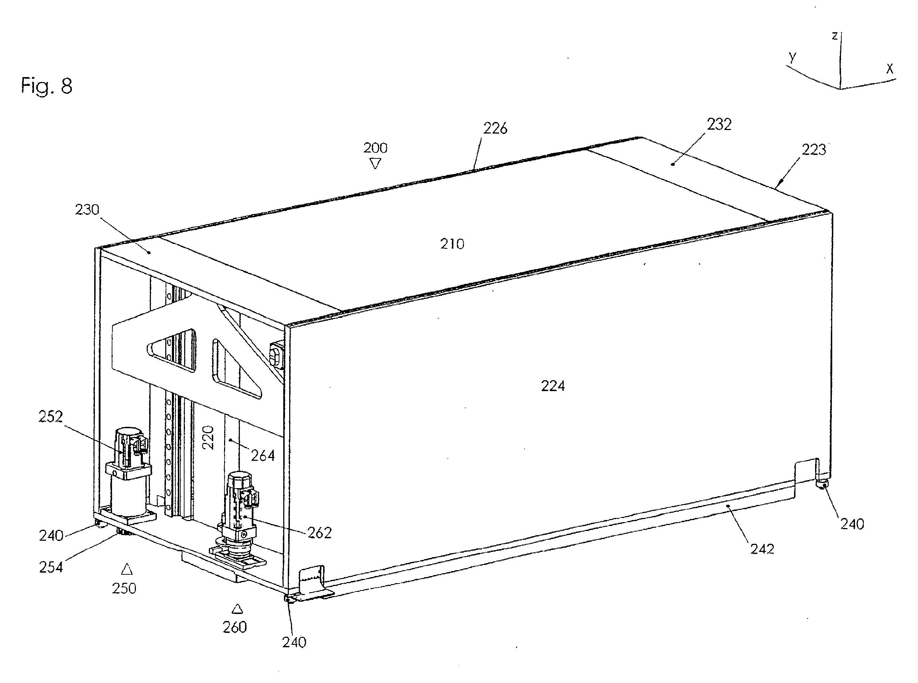

Die Baubox 200 wird somit ständig zwischen der Bauposition und der Entpackungsposition hin- und hergefahren, wozu die Baubox 200 auf einem Schienensystem 140 angeordnet ist (sog. einfacher Shuttle-Betrieb). D.h., die in den Figuren 1 bis 5 gezeigte Anlage 100 weist genau eine Baubox 200 auf. Die Baubox 200 ist somit nicht als Wechselbehälter ausgebildet, sondern vielmehr anlagenfest ausgebildet; insbesondere ist die Baubox 200 selbstfahrend ausgebildet, wozu sie einen bauboxseitigen, d.h. an der Baubox angebrachten, Fahrantrieb 250 mit eigenem Fahrmotor 252 aufweist (siehe Figur 8 sowie die unten stehende Beschreibung der Baubox), der über eine in das Gehäuse führende Schleppkette bzw. Schleppkabel 270 (siehe Figuren 2 und 3) mit Strom versorgt wird; ferner weist die Baubox 200 einen bauboxseitigen Hubantrieb 260 mit eigenem Hubmotor 262 auf, welcher ebenfalls über die Schleppkette 270 mit Strom versorgt wird (siehe hierzu Figur 8 sowie die unten stehende Beschreibung der Baubox).

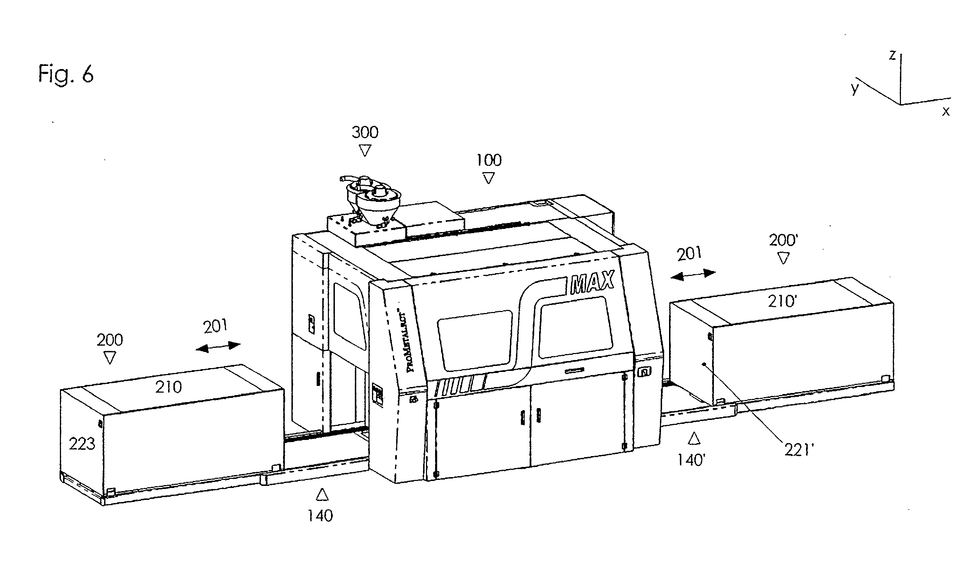

Wie in **Figur 6** gezeigt ist, kann die Anlage 100 gemäß einer anderen Ausführungsform der Erfindung aber auch eine zweite Baubox 200' aufweisen, die entlang eines zweiten Schienensystems 140 (oder eines gemeinsamen Schienensystems) und durch eine zweite stirnseitige Baubox-Einfahr/AusfahrÖffnung in dem Gehäuse 110, welche der ersten Baubox-Einfahr/Ausfahr-Öffnung abgewandt ist, entlang des Pfeils 201 zwischen der gemeinsamen Bauposition und einer zweiten Entpackungsposition hin- und herfahrbar ist. Folglich kann nach der Fertigstellung eines ersten Formkörpers unter Verwendung der ersten Baubox 200, die erste Baubox 200 in die ihr zugeordnete erste Entpackungsposition gefahren werden, um den Formkörper auszupacken. Sobald die Anlage 100 frei ist, d.h. die erste Baubox 200 aus der Anlage heraus gefahren ist, kann die zweite Baubox 200' in die Bauposition gefahren und fixiert werden, um einen zweiten Formkörper unter Verwendung der zweiten Baubox 200' herzustellen (sog. doppelter Shuttle-Betrieb). Mit dem doppelten Shuttle-Betrieb kann die Anlage 100 quasi-kontinuierlich betrieben werden, wohingegen mit dem einfachen Shuttle-System lediglich ein Batchbetrieb möglich ist. Die Baubox 200' ist wie die Baubox 200 anlagenfest und selbstfahrend ausgebildet. Im Übrigen entspricht die in Figur 6 gezeigte Anlage 100 der in den Figuren 1 bis 5 gezeigten Anlage 100.

Die Figuren 3 bis 5 zeigen die Anlage 100 ohne das Gehäuse 110. Die Baubox 200 befindet sich in der Bauposition, und die Bauplattform 210 ist nach oben gefahren. Der Druckkopf 510 der Druckvorrichtung 500 und der Beschichter 400 befinden sich jeweils in ihrer Parkposition. In der jeweiligen Parkposition sind Beschichter 400 und Druckvorrichtung 500 an gegenüberliegenden Seiten der Bauplattform 210 angeordnet, insbesondere sind der Druckkopfträger 520 und der Beschichter-Träger 430 parallel zueinander sowie parallel zu den Längsseiten der Bauplattform 210 angeordnet. Die beiden Träger 430 und 520 sind in y-Richtung über die Bauplattform 210 hin verfahrbar, d.h. in Querrichtung der Bauplattform 210 und senkrecht zu der Verfahrrichtung der Baubox 200. Ferner kann der Druckkopf 510 in x-Richtung, d.h. in Längsrichtung der Bauplattform 210, entlang des Druckkopfträgers 520 verfahren werden. In einer alternativen Ausführungsform können der Druckkopf-Träger 520 und der Beschichter-Träger 430 allerdings auch senkrecht zu der Längsachse der Bauplattform 210 angeordnet sein, d.h. an den sich gegenüberliegenden kurzen Seiten der Bauplattform 210, so dass sie in x-Richtung über die Bauplattform 210 hinweg verfahrbar sind. Die Mischvorrichtung 300 ist an einer vertikalen Säule 151 des Anlagenrahmens 150 befestigt und zwar oberhalb des Vorlagebehälters 410 und oberhalb des Zuführtrichters 440 des Beschichters 400, wobei die Ausgabeöffnung 312 des Mischers 310 in der Beschickungsposition des Beschichters 400 über dem Zuführtrichter 440 angeordnet ist, um den Vorlagebehälter 410 über den Zuführtrichter 440 mit frisch zubereitetem Baumaterial zu beschicken.

Die Anlage 100 weist ferner eine nicht gezeigte zentrale Steuereinrichtung auf, mit der der Prozessablauf und die einzelnen Komponenten wie Mischvorrichtung 300, Beschichter 400, Druckvorrichtung 500, Beschichter-Reinigungsstation 600 und Druckkopf-Reinigungsstation 700 gesteuert werden können. Im Sinne dieser Anmeldung soll dabei von dem Begriff "Steuern" auch ein "Regeln" umfasst sein, d.h. die Steuereinrichtung kann auch eine Regelungseinrichtung sein.

### Baubox 200

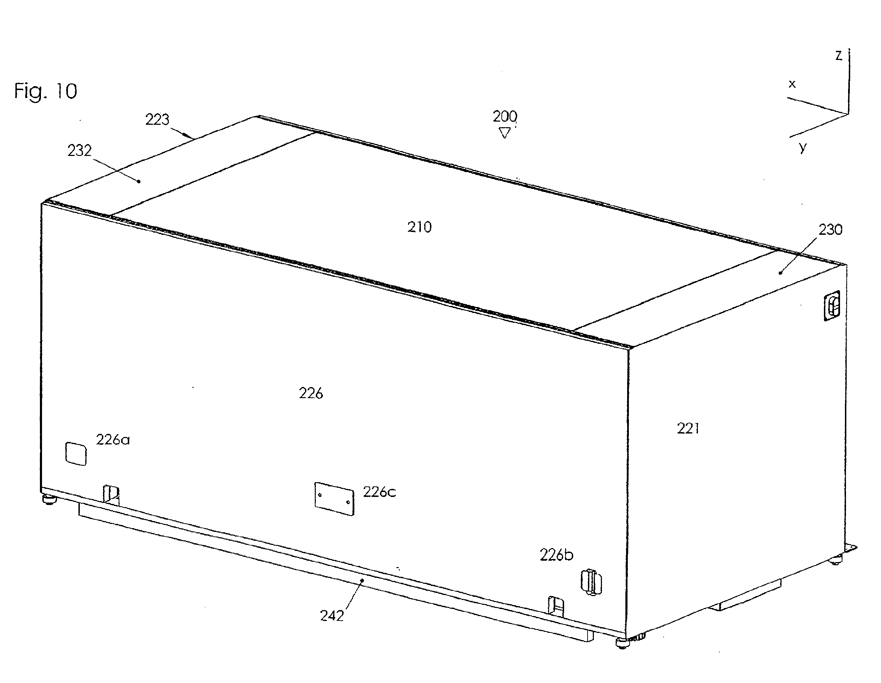

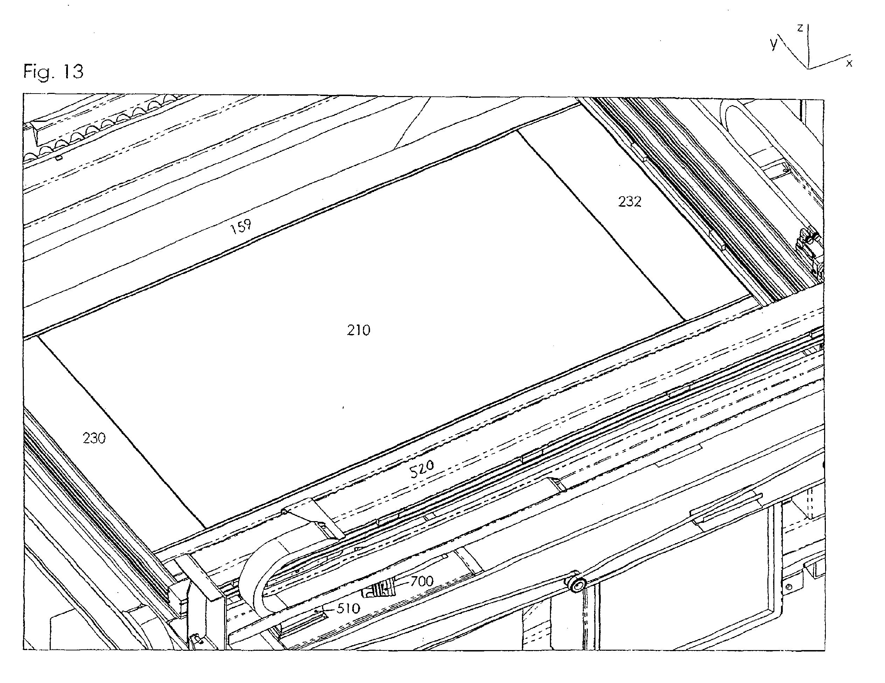

Im Folgenden werden unter Bezugnahme auf die Figuren 7 bis 15 die Baubox 200 (welche alternativ auch als Baubehälter 200 bezeichnet wird) sowie das für die Baubox 200 vorgesehene Schienensystem 140 (insbesondere Figuren 7 bis 9), das Bauboxfixierungssystem zum Ausrichten und Fixieren der Baubox 200 an dem Anlagenrahmen 150 (Figuren 10 bis 12) sowie die Baufeldabdeckung (Figuren 13 bis 15) im Detail beschrieben.

Wie in **Figur 7** gezeigt ist, weist die Baubox vier Seitenwände 221, 223, 224 und 226 auf, welche sich jeweils in vertikaler Richtung erstrecken. Die vordere Seitenwand/Stirnwand 221 dient als Verkleidungswand und bildet mit einer vertikalen Vorderwand 220 der Baubox einen Zwischenraum zur Aufnahme des Fahrantriebs 250 und des Hubantriebs 260 aus (siehe Figur 8). Auf die gleiche Weise dient die hintere Seitenwand/Stirnwand 223 als Verkleidungswand und bildet mit einer vertikalen Rückwand (nicht gezeigt) der Baubox einen zweiten Zwischenraum zur Aufnahme eines weiteren Hubantriebs (nicht gezeigt) aus. Die beiden Seitenwände 224 und 226 bilden zusammen mit der Vorderwand 220 und der Rückwand einen nach oben und unten offenen Behälter bzw. Begrenzungsrahmen aus, der im Längsschnitt rechteckig ausgebildet ist, d.h. der Begrenzungsrahmen hat zwei kurze Seitenwände sowie zwei lange Seitenwände.

Ferner weist die Baubox 200 eine erste Baufeldplatte/ Abdeckungsplatte 232 und eine zweite Baufeldplatte/ Abdeckungsplatte 230 auf, welche sich jeweils in horizontaler Richtung zwischen und senkrecht zu den beiden langen Seitenwänden 224 und 226 erstrecken und den ersten bzw. zweiten Zwischenraum nach oben abdecken. Wenn sich die Baubox 200 in der Bauposition befindet, bilden die beiden Platten 230, 232 einen der Teil der Baufeldabdeckung aus (siehe z.B. Figur 13).

Ferner weist die Baubox 200 eine Bauplattform 210 auf, die einen in vertikaler Richtung höhenverstellbaren Behälterboden ausbildet, wozu die Bauplattformunterseite auf einem Bauplattform-Träger (nicht gezeigt), z.B. einem Tragarm, abgestützt ist, der über einen Hubantrieb in vertikaler Richtung verfahrbar ist. Die Bauplattformoberseite bildet die Arbeitsfläche, auf der das herzustellende Objekt aufgebaut wird. Während des Bauprozesses, d.h. wenn sich die Baubox 200 in der Bauposition befindet, wird die Bewegung der Bauplattform durch die zentrale Steuereinrichtung gesteuert. Ferner kann die Position der Bauplattform 210 über einen an der vorderen Stirnwand 220 angebrachten Druckknopf 212 manuell eingestellt werden.

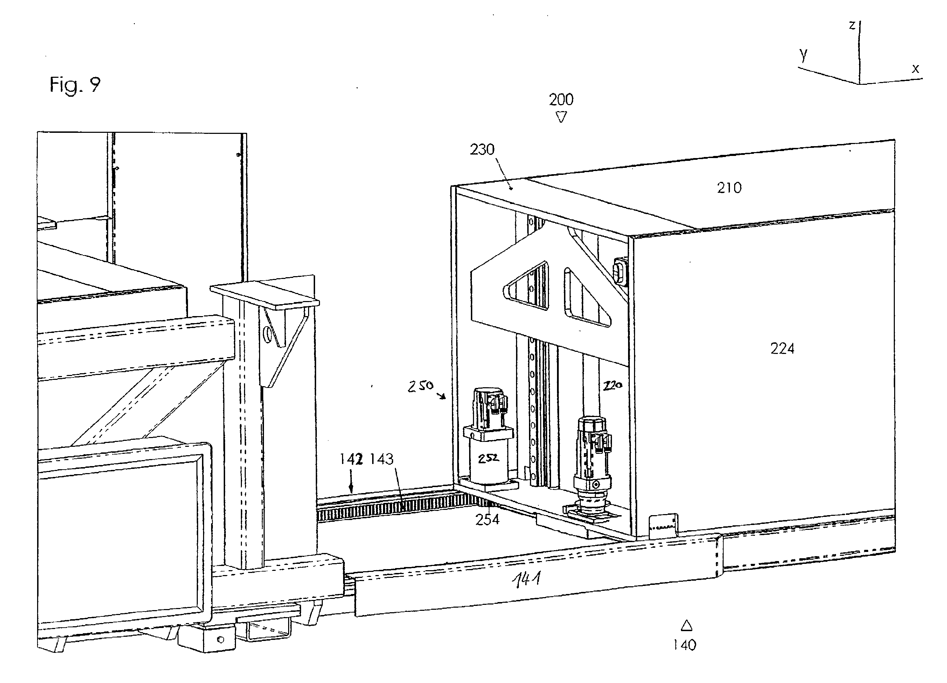

An der Unterseite der Baubox 200 sind eine Mehrzahl von seitlichen Führungsrollen 240 angebracht (gemäß dieser Ausführungsform vier), welche mit dem Schienensystem 140 zusammenwirken, um eine zentrierung/Ausrichtung der Baubox 200 in/entlang der y-Richtung, d.h. in Baubox-Querrichtung, zu ermöglichen. Die Führungsrollen 240 können z.B. an den Innenseiten der Schienen 141, 142 abrollen. Ferner ist an der Unterseite bzw. unteren Stirnfläche/Randfläche der ersten Seitenwand 224 sowie an der Unterseite der zweiten Seitenwand 226 jeweils eine leistenförmige Gleitkufe 242 angebracht, wobei die beiden Gleitkufen 242 auf an den Innenseiten der Schienen 141, 142 angebrachten Rollen 144 stehen, welche in Figur 7 gestrichelt dargestellt sind. Ferner ist an der Bauboxunterseite ein Zahnrad 254 angebracht, das Teil des in Figur 8 gezeigten bauboxseitigen Fahrantriebs 250 ist und das in die in Figur 9 gezeigte Zahnstange 143 des Schienensystems 140 eingreift. Bei einer Drehbewegung des Zahnrads 254 wird die Baubox 200 daher in x-Richtung über die Rollen 144 hinweg bewegt.

**Figur 8** zeigt die Baubox 200 ohne die vordere Stirnwand 221. Wie aus Figur 8 ersichtlich ist, weist die Baubox 200 einen in die Baubox integrierten Baubox-Fahrantrieb 250 sowie einen in die Baubox 200 integrierten Bauplattform-Hubantrieb 260 auf. In der gezeigten Ausführungsform sind der Baubox-Fahrantrieb 250 und der Bauplattform-Hubantrieb 260 an der vorderen Stirnseite der Baubox 200 angebracht (zwischen der vorderen Stirnwand 221 und der parallel zu dieser angeordneten Vorderwand 221). Dies hat den Vorteil, dass die Schleppkette/Schleppkabel 270 für die elektrischen Anschlüsse (vgl. Figuren 2 und 3) kürzer ausgeführt werden kann und einfacher zu führen ist, da die vordere Stirnseite 220 in der Entpackungsposition der Baubox dem Gehäuse 110 der Anlage zugewandt ist. Die beiden Antriebe 250, 260 können aber auch an einer anderen Stelle positioniert sein, z.B. jeweils an der hinteren Stirnseite. Alternativ können die beiden Antriebe 250, 260 auch auf die vordere und die hintere Stirnseite verteilt sein. Gemäß einer weiteren Ausführungsform der Erfindung sind wie in Figur 8 gezeigt an der vorderen Stirnseite ein Fahrantrieb 250 sowie ein Hubantrieb 260 vorgesehen, wobei an der hinteren Stirnseite ein zusätzlicher Hubantrieb (nicht gezeigt) bereitgestellt ist, der mit dem Hubantrieb 260 synchronisiert ist. In einer weiteren Ausführungsform kann zudem auch ein zusätzlicher Fahrantrieb an der hinteren Stirnseite vorgesehen sein.

Mit dem Baubox-Fahrantrieb 250 kann die Baubox 220 zwischen der Bauposition und der Entpackungsposition im oben erwähnten einfachen Shuttle-Betrieb hin- und hergefahren werden (in x-Achsenrichtung, d.h. in Längsrichtung der Baubox). Aufgrund des eigenen Fahrantriebs 250 kann eine separate Vorrichtung zum Ein- und Ausfahren der Baubox 200 in das bzw. aus dem Gehäuse 110 entfallen. Zudem kann die Aufbauhöhe reduziert werden. Der Baubox-Fahrantrieb 250 weist einen Fahrantriebs-Motor 252 auf, der Bestandteil der Baubox 200 ist. Die Stromversorgung des Fahrantrieb-Motors 252 erfolgt über eine Schleppkette 270 (vgl. Figuren 2 und 3). Der Motor 252 treibt das bereits oben beschriebene Zahnrad 254 an, das in die Zahnstange 143 eingreift. Der Fahrantrieb 250 ist mit der zentralen Steuereinrichtung verbunden (ebenfalls über die Schleppkette 270), so dass das Verfahren der Baubox 200 automatisiert erfolgen kann.

Der Bauplattform-Hubantrieb 260 weist einen Hubantrieb-Motor 262 auf, der Bestandteil der Baubox 200 ist. Der Bauplattform-Hubantrieb 260 weist ferner eine drehbar angeordnete Schraubspindel 264 und eine Spindelmutter (nicht gezeigt) auf, welche durch Drehung der Spindel 264 entlang der Spindel nach oben bzw. unten bewegbar ist. Die Spindelmutter ist dabei mit dem Träger (nicht gezeigt) verbunden, der die Bauplattform 200 an ihrer Unterseite abstützt. Hierzu ist eine Ausnehmung in der Vorderwand 221 vorgesehen, durch die der Tragarm greift, um die Bauplattform 210 von unten abzustützen. Somit kann durch eine Drehung der Spindel die Bauplattform 210 abgesenkt bzw. angehoben werden. Ein solcher Spindeltrieb-Mechanismus ist z.B. in der DE 20 2006 010 327 U1 beschrieben, auf die insofern verwiesen wird als der Spindeltrieb, umfassend den Motor, die Spindel, die Spindelmutter und der Tragarm, betroffen ist. Jedoch ist die Baubox 200 anders als der in der DE 20 2006 010 327 U1 beschriebene Baubehälter nicht als Wechselbehälter ausgeführt, sondern vielmehr fester Bestandteil der Anlage. Die Abdichtung der Ausnehmung in der Vorderwand 221, durch die der Träger greift, kann zum Beispiel mit einem Blech erfolgen, das nach der Art eines Rollos funktioniert und sich beim Absenken der Bauplattform 210 auf die Innenseite der Vorderwand 221 anlegt, um die Tragarm-Ausnehmung zu überdecken/abzudichten. Eine solche Abdichtung ist z.B. in der DE 100 47 615 beschrieben (vgl. dort die Figuren 2 und 3), auf die insofern Bezug genommen wird. Die Stromversorgung des Motors 262 erfolgt wie die Stromversorgung des Motors 252 über die Schleppkette 270 (vgl. Figuren 2 und 3). Zudem ist auch der Bauplattform-Hubantrieb 260 mit der zentralen Steuereinrichtung verbunden (ebenfalls über die Schleppkette 270), so dass das Absenken der Bauplattform 210 während des Bauprozesses von der Steuereinrichtung gesteuert werden kann. Das Anheben der Bauplattform 210 in der Entpackungsposition der Baubox 200 kann entweder ebenfalls durch die zentrale Steuereinrichtung gesteuert werden oder manuell gesteuert werden durch Betätigen des Druckknopfes 212. Der in die Baubox 200 integrierte Hubantrieb 260 kann somit sowohl beim Bauprozess als auch beim Auspacken des fertig gestellten Formkörpers verwendet werden, so dass ein separater Motor zum Auspacken eingespart werden kann. Ferner muss die Bauplattform nach Beendigung eines Baujobs vor dem Herausfahren aus dem Gehäuse in die Entpackungsposition nicht bis zum unteren Totpunkt abgesenkt werden, wie dies bei Anlagen der Fall ist, bei denen der Hubantrieb an dem Anlagenrahmen montiert ist, sondern kann unmittelbar nach Fertigstellung des Formkörpers mit dem bauboxseitigen Fahrantrieb 250 in die Entpackungsposition gefahren werden, in der die Bauplattform 210 über den bauboxseitigen Hubantrieb 260 angehoben wird. Somit kann durch die Anordnung von Hubantrieb 260 und Fahrantrieb 250 an der Baubox 200 auch eine Zeitersparnis erzielt werden.

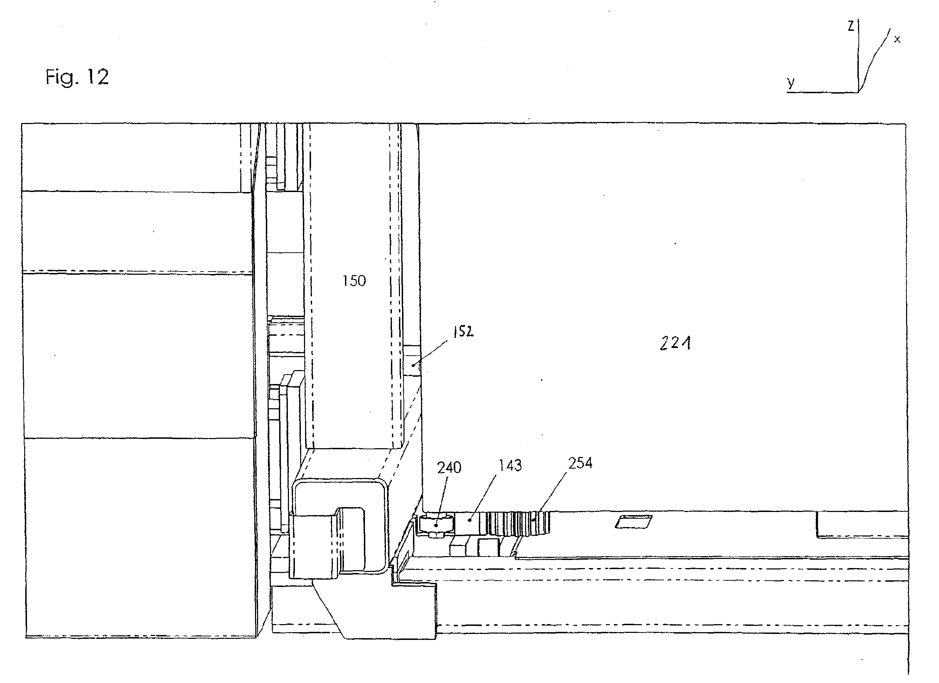

**Figur 9** zeigt die Baubox 200 auf dem für die Baubox 200 vorgesehenen Schienensystem 140. Das Schienensystem 140 weist eine erste Schiene 141 und eine zweite Schiene 142 auf, welche parallel zueinander angeordnet sind. Ferner weist das Schienensystem 140 eine zahnstange 143 auf, die parallel zu und nahe der zweiten Schiene 142 angeordnet ist. Die Zähne der Zahnstange 143 sind der ersten Schiene 141 zugewandt. Das an der Bauboxunterseite angebrachte Zahnrad 254 greift in die Zähne der Zahnstange 143 ein, um an der Zahnstange 143 abzurollen, wenn das Zahnrad über den Motor 252 angetrieben wird. An der der zweiten Schiene 142 zugewandten Seite der zahnstange 143 rollen die beiden Führungsrollen 240 ab, die auf der Seite der zweiten Seitenwand 226 angebracht sind (vgl. Fig. 12). Zusätzlich oder alternativ können die beiden Führungsrollen 240 aber auch an der Innenseite der zweiten Schiene 142 abrollen. Die beiden Führungsrollen 240, die auf der Seite der ersten Seitenwand 226 angebracht sind, rollen an der Innenseite der ersten Schiene 141 ab. Die Baubox ist somit durch die Führungsrollen entlang/in der y-Richtung zentriert. Zur Reduzierung der Reibung, die bei einem Verfahren der Baubox 200 auftritt, sind an den einander zugewandten Innenflächen der Schienen Rollen (nicht gezeigt) angebracht, über die die Baubox 200 mit den Gleitkufen 242 rollen kann.

Für den Bauprozess ist es wichtig, dass sich die Baubox 200 exakt in der vorbestimmten Bauposition befindet, wozu die Baubox 200 in allen Achsrichtungen zentriert und fixiert sein sollte. Die Zentrierung und Fixierung in y-Richtung erfolgt über das oben beschriebene Führungsrollensystem. In z-Richtung wird die Baubox durch ihr Eigengewicht ausreichend fixiert. Somit ist nach dem Einfahren der Baubox 200 in das Gehäuse 110 und in die Bauposition lediglich noch eine Zentrierung und Fixierung in x-Richtung erforderlich, welche durch das in den Figuren 10 bis 13 gezeigte Bauboxfixierungssystem erfolgt.

Wie in **Figur 10** gezeigt ist, weist die Baubox 200 an einer der beiden Seitenwände (gemäß dieser Ausführungsform an der zweiten Seitenwand 226) ein Anschlagplättchen 226a, eine Ausricht-Vertiefung 226b und ein Sensorzielobjekt 226c auf. Das Anschlagplättchen 226a ist in Längsrichtung hinten angeordnet, d.h. nahe der hinteren Stirnwand 223, und die Vertiefung 226b ist vorne (nahe der vorderen Stirnwand 221) angeordnet. Die Position des Anschlagplättchens 226a und die Position der Vertiefung 226b können aber auch vertauscht sein. In z-Richtung sind das Anschlagplättchen 226a und die Vertiefung 226b in dem unteren Bereich der Seitenwand angeordnet. Die Ausricht-Vertiefung 226b ist konusförmig ausgebildet. Das Sensorzielobjekt 226c ist in Längsrichtung im Wesentlichen mittig angeordnet.

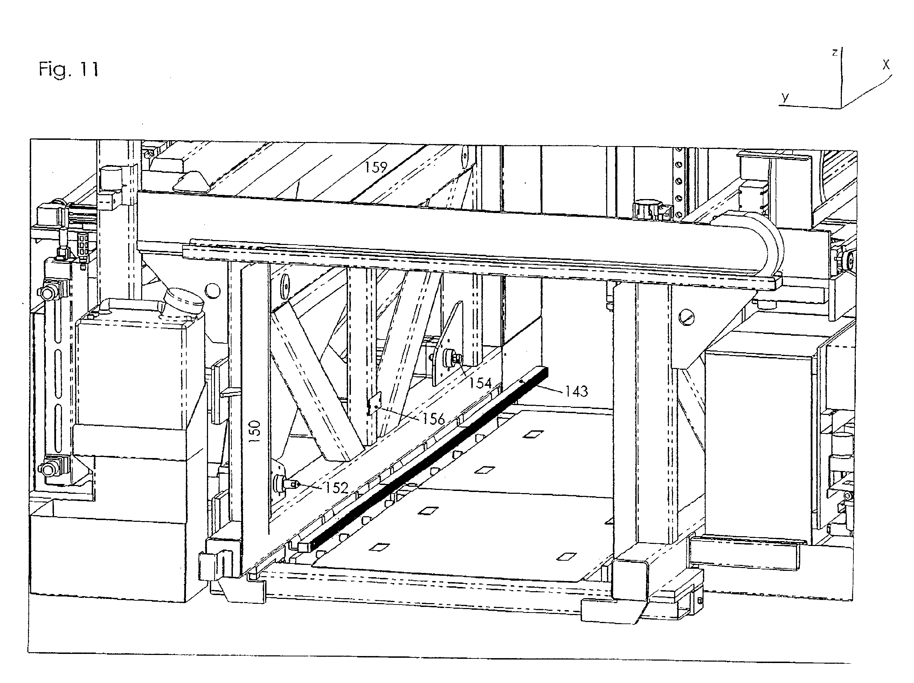

Wie in **Figur 11** gezeigt ist, sind an dem Anlagenrahmen 150 ein erstes Anpresselement/Ausricht-Element 152, welches mit der Ausricht-Vertiefung 226b zusammenwirkt, ein zweites Anpresselement/Fixierelement 154, welches mit dem Anschlagplättchen 226a zusammenwirkt, und ein Sensor 156 angebracht, welcher mit dem Sensorzielobjekt 226c zusammenwirkt. Das erstes Anpresselement 152 und das zweite Anpresselement 154 sind jeweils in y-Richtung bewegbar/verfahrbar. Die Bewegung der beiden Anpresselemente 152 und 154 wird über die zentrale Steuereinrichtung gesteuert. Das erste Anpresselement 152 weist einen Dorn auf, der entsprechend der Form der sich verjüngenden Vertiefung 226b geformt ist. Insbesondere ist der Endabschnitt des ersten Anpresselements 152 konusförmig ausgebildet. Das zweite Anpresselement 154 weist einen Bolzen mit einem flach ausgebildeten Endabschnitt auf.

Wenn die Baubox 220 in das Gehäuse 110 hinein gefahren ist, detektiert der Sensor 156, ob das Sensorzielobjekt 226c in einer vorbestimmten Position ist. Wenn das Sensorzielobjekt 226c in der vorbestimmten Position ist, gibt der Sensor ein "Baubox-in-Position-Signal" an die zentrale Steuereinrichtung aus. Die zentrale Steuereinrichtung veranlasst daraufhin ein Ausfahren der beiden Anpresselemente 152, 154, d.h. eine Bewegung in y-Richtung zu der Baubox 200 hin. Dadurch wird das erste Anpresselement 152 mit dem Konus in die Vertiefung 226c (siehe **Figur 12**) und das zweite Anpresselement 154 mit dem flachen Endabschnitt gegen das Anschlagplättchen 226a gedrückt, wodurch eine Zentrierung und Fixierung der Baubox 200 in/entlang der x-Richtung und an dem Anlagenrahmen erfolgt. Sodann kann der Bauprozess beginnen.

Da die zentrierung in y-Richtung bereits durch die Führungsrollen 240 erfolgt, ist es ausreichend das Bauboxfixierungssystem einseitig auszubilden, d.h. es ist ausreichend, wenn nur eine der beiden Seitenwände mit der Vertiefung 226b und dem Anschlagplättchen 226a versehen ist.

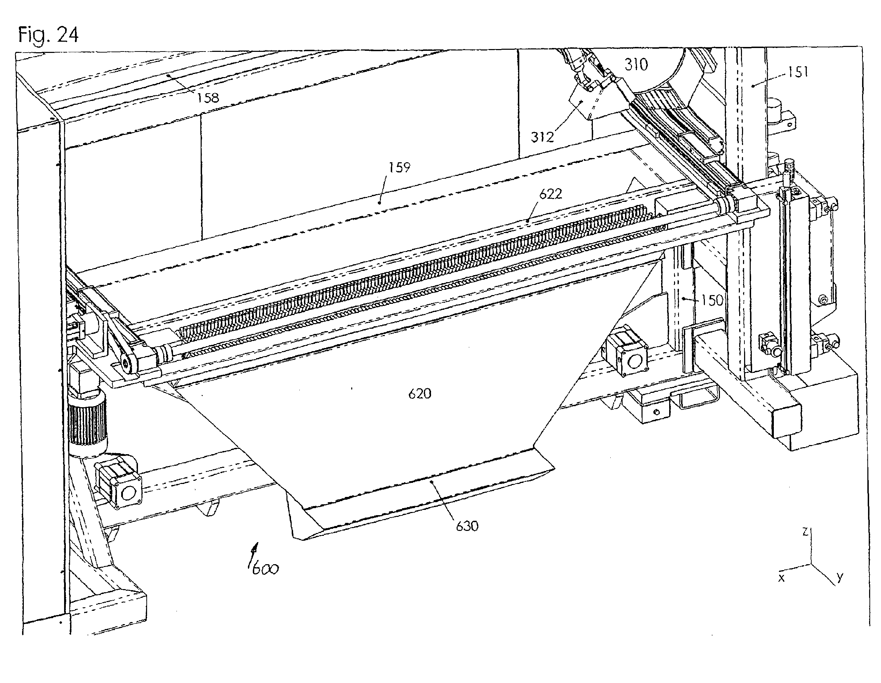

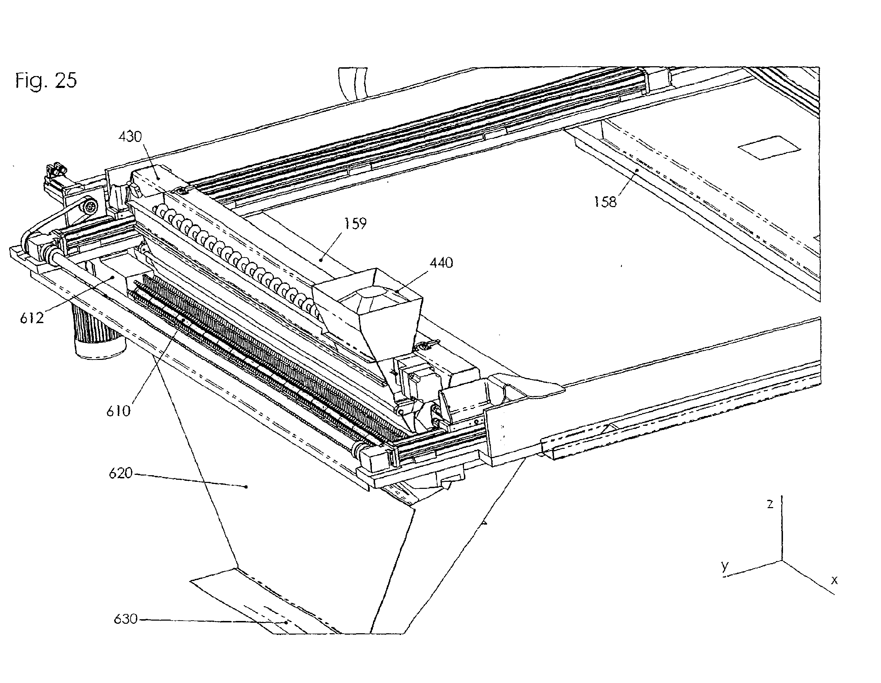

In **Figur 13** ist die Baubox 200 in ihrer Bauposition fixiert. Wie aus Figur 13 ersichtlich ist, wird die die Bauplattform 210 bzw. das Baufeld umgebende Baufeldabdeckung bzw. Baufeldumrahmung zum einen durch die beiden an der Baubox 200 angebrachten horizontalen Abdeckungsplatten 230 und 232 und zum anderen durch zwei anlagenseitige horizontale Begrenzungsplatten 158 und 159 (siehe auch Figuren 24 und 25) gebildet, welche an dem Anlagenrahmen 150 befestigt sind. Die beiden bauboxseitigen Baufeldplatten 230 und 232 erstrecken sich mit ihrer jeweiligen Längsachse parallel zur y-Achse (= Baubox-Querrichtung), und die beiden stationären anlagenrahmenseitigen Baufeldplatten 158 und 159 erstrecken sich mit ihrer jeweiligen Längsachse parallel zu der x-Achse (= Baubox-Längsrichtung).

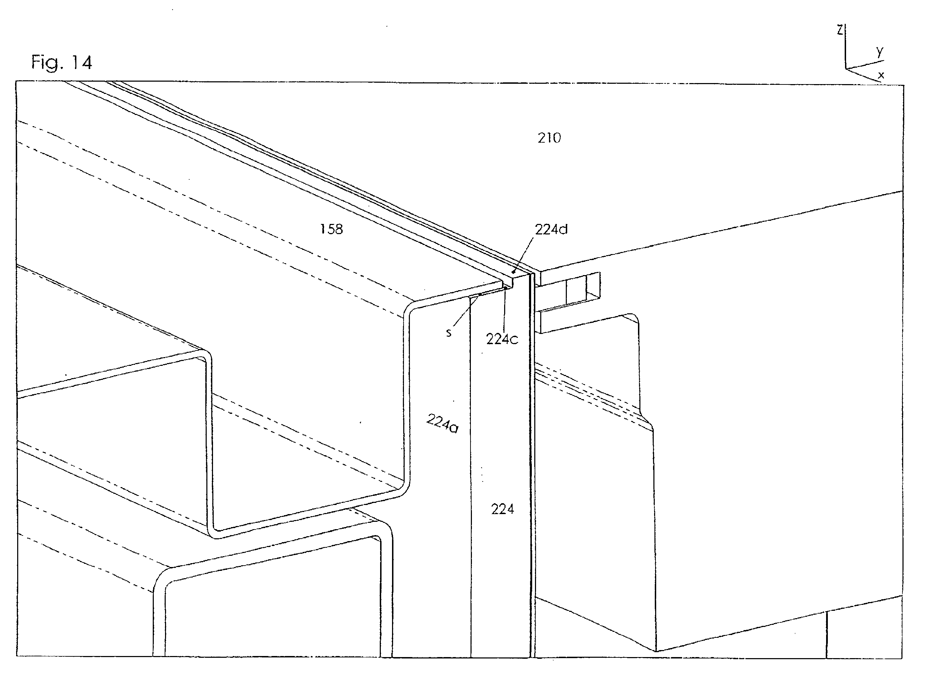

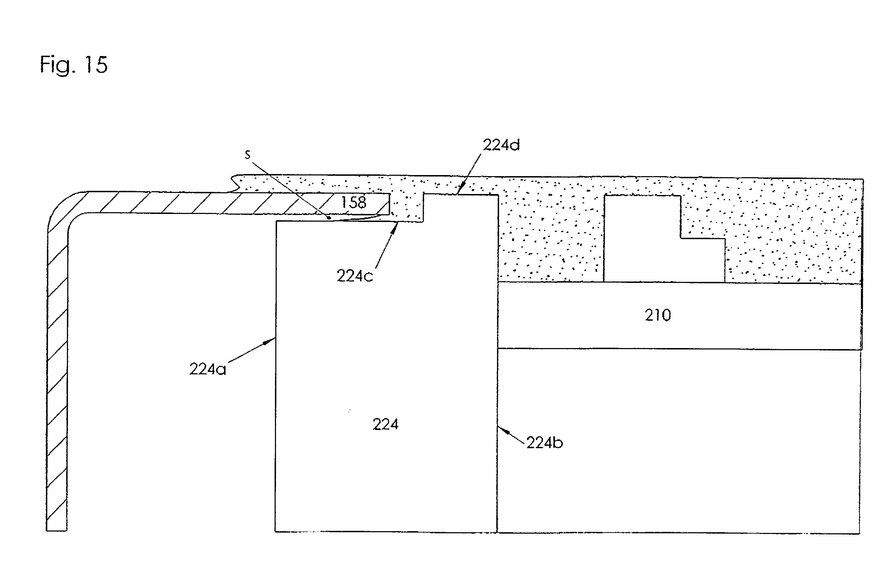

Wie aus den **Figuren 14** **und** **15** ersichtlich ist, weist die erste Seitenwand 224 an ihrer Oberseite bzw. an ihrer oberen Randfläche, welche sich in horizontaler Richtung zwischen der Außenseite 224a und der Innenseite 224b der ersten Seitenwand 224 erstreckt, eine Stufe 224d auf. Die Stufe 224d grenzt an die Innenseite 224b an und ist im Wesentlichen in derselben Horizontalebene angeordnet wie die beiden bauboxseitigen Baufeldplatten 230, 232. Ferner ist an bzw. von der Oberseite der oberen Randfläche eine horizontale Randfläche 224c ausgebildet, welche gegenüber der Stufe 224d abgesenkt ist und eine Dichtfläche ausbildet. Die horizontale Randfläche 224c grenzt an die Außenseite 224a an. Der Betrag bzw. die Höhe, um die die Dichtfläche 224c gegenüber der horizontalen Fläche der Stufe 224d und gegenüber den beiden bauboxseitigen Baufeldplatten 230, 232 abgesenkt ist, ist etwas größer als die Dicke der rahmenseitigen Baufeldplatte/Begrenzungsplatte 158, so dass ausreichend vertikalspiel zwischen der Unterseite der rahmenseitigen Baufeldplatte 158 und der Dichtfläche 224c vorhanden ist, so dass die Baubox 200 sicher in die Bauposition gefahren werden kann. Der zwischen Dichtfläche 224c und rahmenseitiger Baufeldplatte 158 gebildete Spalt s kann z.B. eine Spalthöhe von 3 bis 20 mm haben, z.B. eine Spalthöhe von 3 bis 10 mm. Des Weiteren hat die Dichtfläche 224c eine derartige Breite, dass einerseits ausreichend Horizontalspiel zwischen der rahmenseitigen Baufeldplatte 158 und der Stufe 224d vorhanden ist, um die Baubox 200 in die Bauposition und aus dieser heraus zu verfahren, und dass andererseits eine ausreichende Baumaterial-Lauflänge bereitgestellt ist. Die Baumaterial-Lauflänge ist diejenige Länge, um die die Dichtfläche 224d von der rahmenseitigen Baufeldplatte 158 überragt wird (siehe Fig. 15), d.h. die Baumaterial-Lauflänge entspricht der Länge des Spalts, der zwischen Dichtfläche 224c und rahmenseitiger Baufeldplatte 158 gebildet ist. Die Baumaterial-Lauflänge ist derart gewählt, dass sich das Baumaterial in dem Spalt s totläuft (siehe Figur 15). Mit anderen Worten bildet sich in dem Spalt s ein Schüttkegel aus dem Baumaterial aus, wobei die Länge des Schüttkegels geringer ist als die Baumaterial-Lauflänge. Die derart geformte Dichtung zwischen Baubox 200 und rahmenseitiger Baufeldplatte 158 wird als Schüttkegeldichtung oder alternativ als Labyrinthdichtung bezeichnet. Eine einzelne Schichtdicke kann z.B. zwischen 0,1 und 1 mm dick sein, z.B. 0,2mm dick sein. Die vertikale Höhe der Stufe kann z.B. 1,5 bis 5mm betragen, z.B. ca. 2 bis 4mm. Der horizontale Abstand zwischen Stufe und Begrenzungsplatte 158 kann z.B. 2 bis 6mm betragen, z.B. ca. 3 bis 4mm. Der vertikale Abstand zwischen Horizontalfläche 224c und Begrenzungsplatte 158 kann z.B. 1 bis 4mm betragen, z.B. ca. 2 bis 3mm. Die Überlappungslänge zwischen Horizontalfläche 224c und Begrenzungsplatte 158 kann z.B. 10 bis 30mm sein, z.B. ca. 15 bis 20mm. Die Breite der Stufe kann z.B. 1,5 bis 4mm sein, z.B. 2 mm. Die Breite der Horizontalfläche 224c kann z.B. 30 bis 40 mm sein, z.B. 35mm. Selbstverständlich sind diese Maße nur beispielhaft und können je nach Anwendung stark variieren.

In der gleichen Weise ist auch die zweite Seitenwand 226 mit einer Stufe versehen, um eine Schüttkegeldichtung zwischen der Baubox 200 und der rahmenseitigen Baufeldplatte 159 auszubilden.

Die Baubox 200 kann somit über den integrierten Fahrantrieb 250 entlang der x-Richtung in die Bauposition gefahren werden und mit dem obigen Bauboxfixierungssystem in der Bauposition fixiert werden, wobei unmittelbar nach der Fixierung der Baubox 200 mit dem Baujob begonnen werden kann. Weitere Schritte wie z.B. ein Anheben der Baubox 200 sind nicht erforderlich. Ferner kann die Anlagenhöhe gering gehalten werden, da die Baufeldhöhe im Wesentlichen der Bauboxhöhe entspricht.

### Mischvorrichtung 300

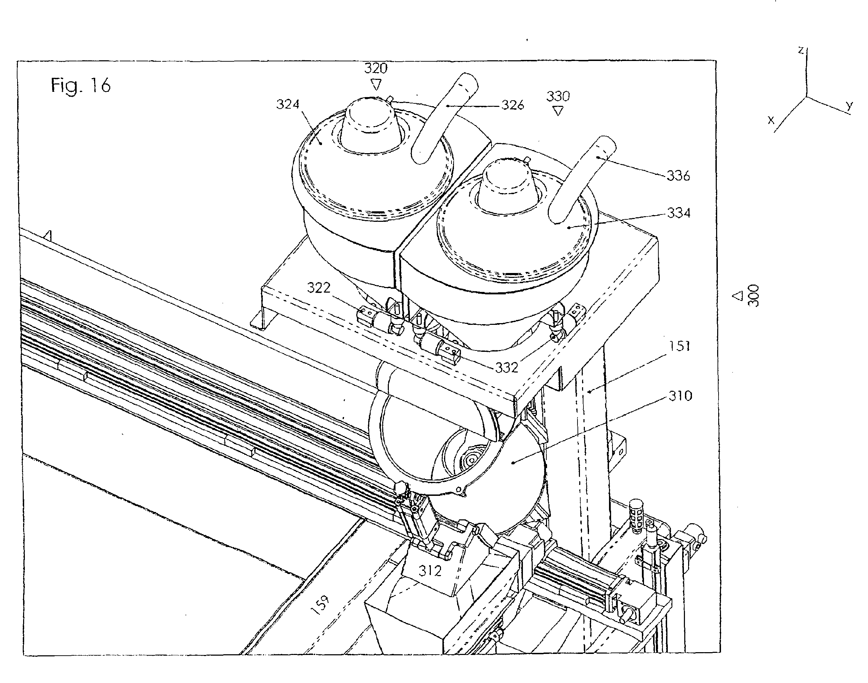

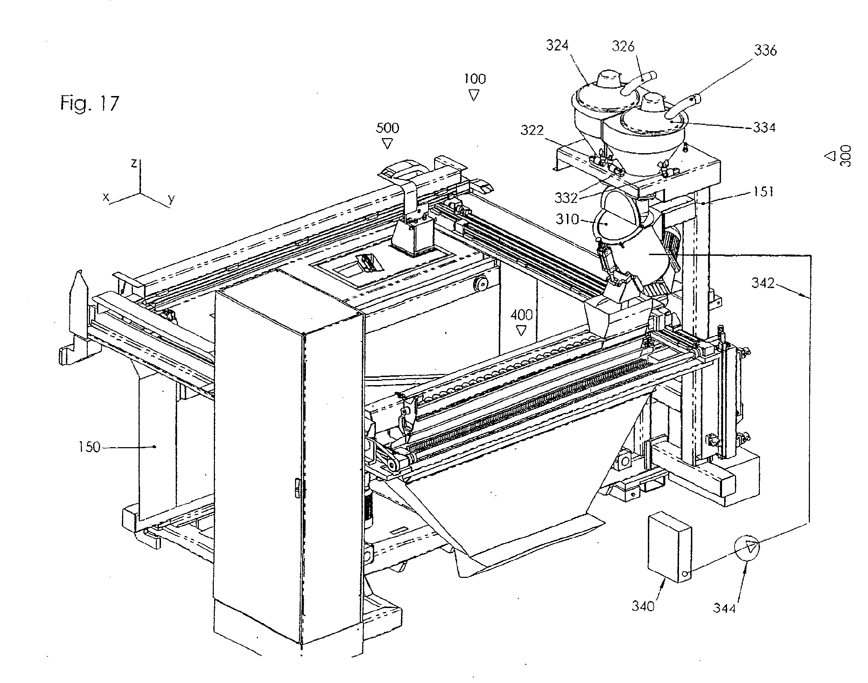

Im Folgenden wird unter Bezugnahme auf die **Figuren 16** **und** **17** eine erfindungsgemäße Mischvorrichtung 300 im Detail beschrieben.

Es wird angemerkt, dass die Mischvorrichtung 300 ebenso wie die oben beschriebene Baubox 200 nicht auf die Verwendung der hierin beschriebenen "Druckanlange" beschränkt ist, sondern vielmehr auch in anderen Rapid-Prototyping-Anlagen/Verfahren angewendet werden kann wie z.B. beim Lasersintern.

Die Mischvorrichtung oder Mischeinheit 300 weist einen Mischer 310 auf, mit dem eine homogene Baumaterial-Mischung erzeugt werden kann. Der Mischer ist oberhalb des Beschichters 400 angeordnet und in die Anlage 100 integriert. Der Mischer 310 ist hier als ein zylindrischer Behälter ausgebildet, der eine Mischkammer begrenzt, in der ein Rühr- bzw. Mischelement angeordnet ist, das über einen Mischantrieb antreibbar ist, der an die zentrale Steuereinrichtung angeschlossen ist. Die Mischkammer hat eine trichterförmige Ausgabeöffnung 312, die in der Beschickungsposition des Beschichters 400 (siehe Fig. 16) über dem Beschichter 400 angeordnet ist, so dass dem Beschichter 400 das in dem Mischer 310 frisch zubereitete Baumaterial durch die Ausgabeöffnung 312 zuführbar ist. Der Mischer ist an einer vertikalen Säule 151 des Anlagenrahmens 150 befestigt. Die Ausgabeöffnung 312 des Mischers 310 wird von einer verstellbaren Armatur verschlossen, die von der zentralen Steuereinrichtung angesteuert wird.

Die Mischeinheit 300 weist ferner einen oberhalb des Mischers 310 angeordneten ersten Dosierbehälter 320, in dem frischer Formsand aufgenommen ist, und einen oberhalb des Mischers 310 angeordneten zweiten Dosierbehälter 330 auf, in dem recycelter Formsand aufgenommen ist. Der erste Dosierbehälter 320 und der zweite Dosierbehälter 330 stehen jeweils auf drei Wiegezellen 322, 332, die das Gewicht des zugeordneten Dosierbehälters 320, 330 erfassen und die jeweils an die zentrale Steuereinrichtung angeschlossen sind. Die beiden Dosierbehälter 320, 330 stehen jeweils über eine Rohrleitung, mit dem Mischer 310 in Verbindung. In der jeweiligen Rohrleitung ist eine verstellbare Armatur (z.B. eine Klappe oder Ventil) vorgesehen, die von der zentralen Steuereinrichtung angesteuert wird. Der erste Dosierbehälter 320 und der zweite Dosierbehälter 330 können jeweils über eine nicht gezeigte Saugleitung, die an dem Anschlussstutzen 326, 336 befestigbar ist, mit Formsand befüllt werden, wozu sie jeweils eine Vorrichtung 324, 334 zum Erzeugen von Unterdruck aufweisen.

Ferner kann die Mischeinheit 300 einen oberhalb des Mischers 310 angeordneten dritten Dosierbehälter (nicht gezeigt) aufweisen, in dem ein pulverförmiger Zuschlagstoff enthalten ist, der z.B. über eine Zellenradschleuse in den Mischer 310 eingespeist wird, die mit der zentralen Steuereinrichtung in Verbindung steht.

Ferner kann dem Mischer 310 mittels einer Dosierpumpe 344 durch eine Flüssigkeitsleitung 342 eine Flüssigkeit (hier Aktivator/Härter) aus einem ersten Flüssigkeitsbehälter 340 dosiert und gesteuert zugeführt werden.

Mit der oben beschriebenen Mischeinheit kann das Baumaterial während des Baubetriebs direkt in der Anlage frisch zubereitet und dem Beschichter insbesondere unmittelbar nach der Zubereitung auf kurzem Wege zur Verfügung gestellt werden. Die einzelnen Komponenten werden in Reinform zu der oberhalb des Beschichters in der Beschickungsstation der Anlage angeordneten Mischeinheit gefördert (Feststoffe/Pulver z.B. über eine Saugleitung, Flüssigkeiten z.B. über Pumpen), wo die Baumaterial-Mischung zubereitet wird und nach ihrer Fertigstellung in den Beschichter eingespeist wird, und zwar durch Öffnen der Armatur (z.B. Klappe oder Schieber), die die Ausgabeöffnung 312 beherrscht.

### Beschichter 400

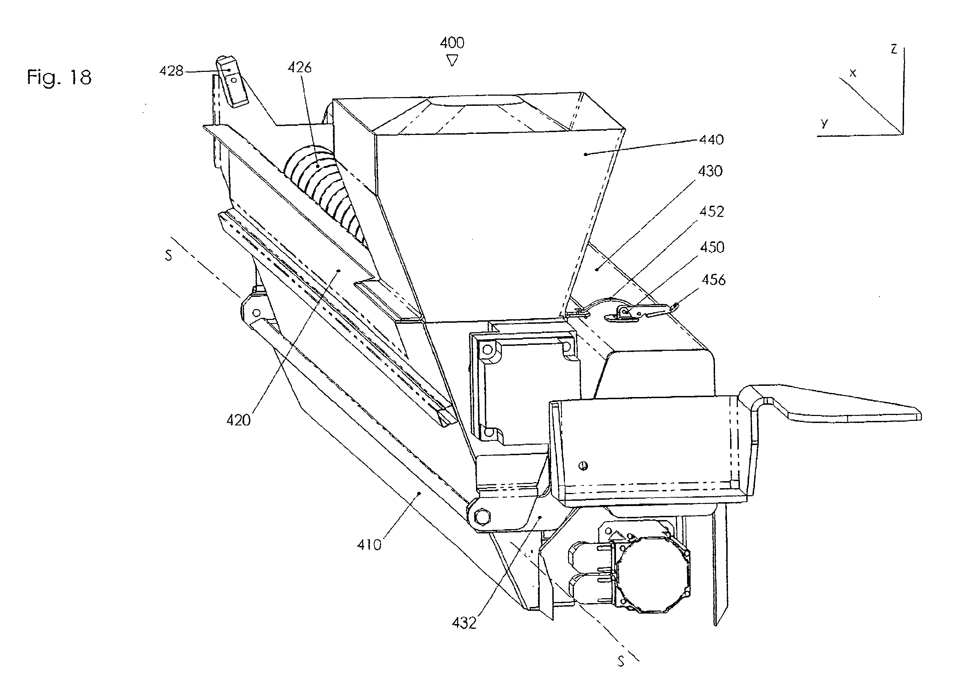

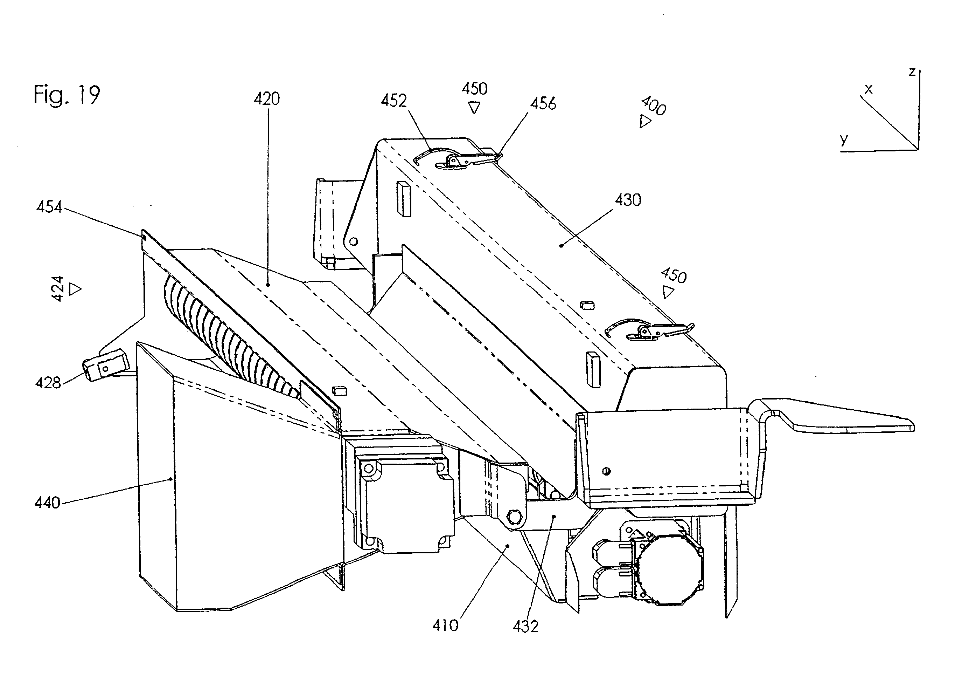

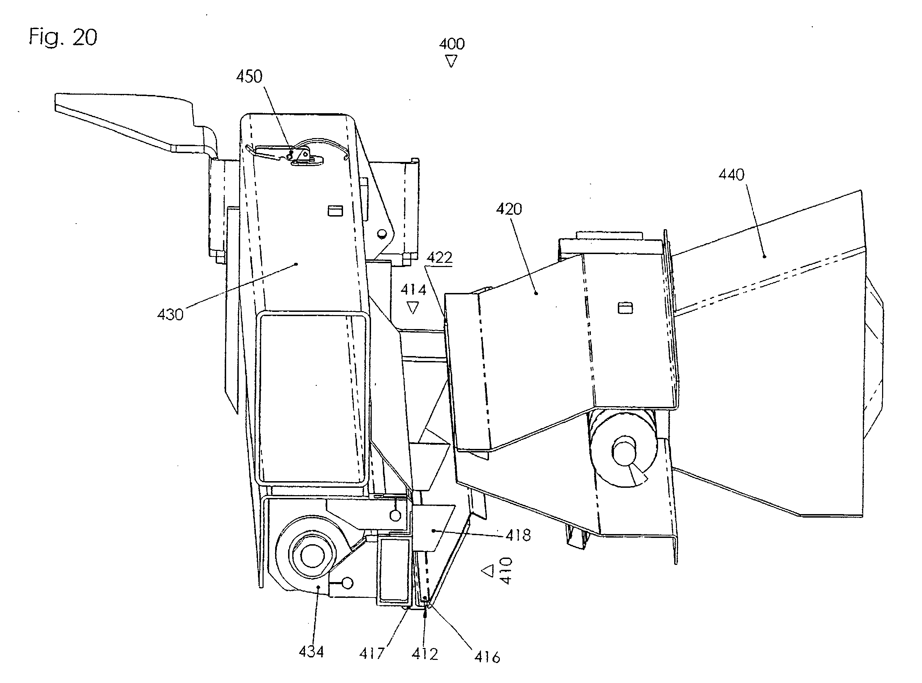

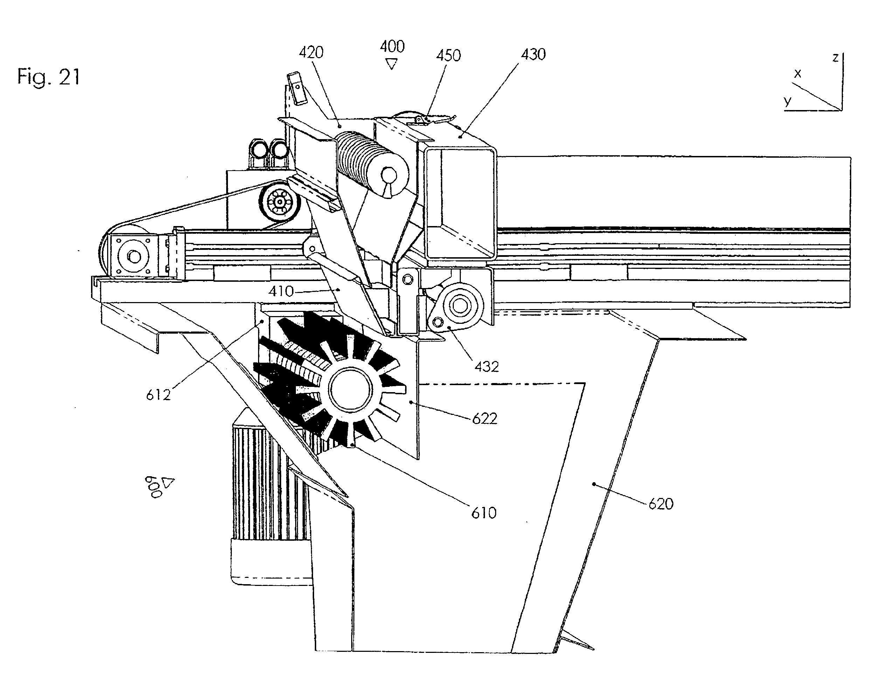

**Die** **Figuren 18 bis 21** zeigen einen horizontal verfahrbaren Beschichter 400 zum Aufbringen der Baumaterial-Schicht auf das Baufeld. Der Beschichter 400 weist einen langgestreckten im Querschnitt trichterförmigen Dosierschacht 410 auf. Der Dosierschacht 410 hat an seiner Unterseite einen Längsschlitz 412 zum Ausgeben des Baumaterials während der Bewegung des Dosierschachts 410 über das Baufeld hin. An seiner Oberseite weist der Dosierschacht 410 eine obere Zuführöffnung 414 auf, durch die dem Dosierschacht 410 Baumaterial zugeführt werden kann.

Der Beschichter 400 weist weiter einen mit dem Dosierschacht mitfahrenden Vorlagebehälter 420 auf, der oberhalb des Dosierschachts 410 angeordnet ist und eine untere Ausgabeöffnung 422 aufweist, die in die Zuführöffnung 414 des Dosierschachtes 410 eintaucht, um den Dosierschacht 410 während des Bauprozesses mit Baumaterial zu versorgen.

Der Dosierschacht 410 und der Vorlagebehälter 420 sind an einem Beschichter-Träger 430 montiert, wobei der Vorlagebehälter 420 schwenkbar mit dem Beschichter-Träger 430 verbunden ist, so dass er von dem Träger 430 und dem Dosierschacht 410 weggeschwenkt werden kann. Im Normalbetrieb ist der Beschichter-Träger 430 wie in Figur 18 gezeigt an dem Träger 430 befestigt/verriegelt und zwar mittels einer Verriegelungsvorrichtung 450, welche einen Greifarm 452 aufweist, der in dem in Figur 18 gezeigten Verriegelungszustand in eine an dem Vorlagebehälter 420 vorgesehene Eingreiföffnung 454 eingreift.

Aufgrund der verschwenkbaren Ausbildung des Vorratsbehälters 420 ist die Zugänglichkeit des Dosierschachts und des Vorratbehälters für eine Reinigung und/oder Reparatur derselben verbessert. Z.B. kann für eine Reinigung und/oder Reparatur des Beschichters 400 zunächst der Baubehälter 200 aus der Anlage 100 heraus gefahren werden, um in der Anlagenmitte Platz zu schaffen, woraufhin der Beschichter 400 in die Mitte der Anlage gefahren wird. Im Anschluss daran kann die Anlage betreten und z.B. der vorlagebehälter 420 von dem Dosierschacht 410 und dem Träger 430 weggeschwenkt werden, um einzelne Stellen/Teile des Beschichters 400 zu reinigen/reparieren, wie z.B. die Zuführöffnung 414 des Dosierschachts 410, die Ausgabeöffnung 422 des Vorlagebehälters 420 oder die Innenwände des Vorlagebehälters 420 und des Dosierschachts 410. Insbesondere kann der Beschichter 400 aufgrund der verschwenkbaren Ausbildung des Vorlagebehälter 420 groß dimensioniert werden, wobei er dennoch von einer einzelnen Person problemlos gereinigt und/oder repariert werden kann, da keine Hebevorrichtung oder dergleichen benötigt, um den Vorlagebehälter nach oben anzuheben und von dem Dosierschacht wegzubewegen.

In dem Beschichter 400 ist eine Verteilerschnecke 426 angeordnet, die zusammen mit dem Vorlagebehälter 420 verschwenkbar ist und die das Baumaterial entlang der Vorlagebehälterlängsrichtung verteilt.

An der Oberseite des Vorlagebehälters 420 ist ein Zuführtrichter 440 angeschraubt, durch den Baumaterial aus der oberhalb des Beschichters 400 angeordneten Mischvorrichtung 300 in den Vorlagebehälter 420 hinein eingebracht werden kann.

Der Längsschlitz 412 des Dosierschachts 410 ist teilweise von einer Partikelmaterial-Umlenkplatte 416 überdeckt, die im Abstand über dem Längsschlitz 412 parallel zu diesem angeordnet ist.

### Druckkopf 500

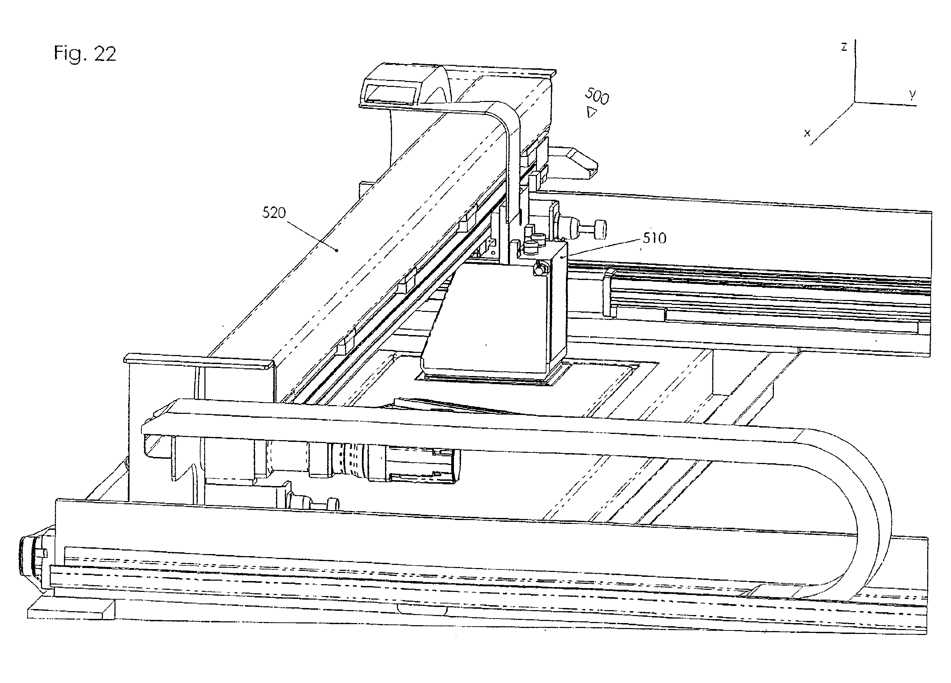

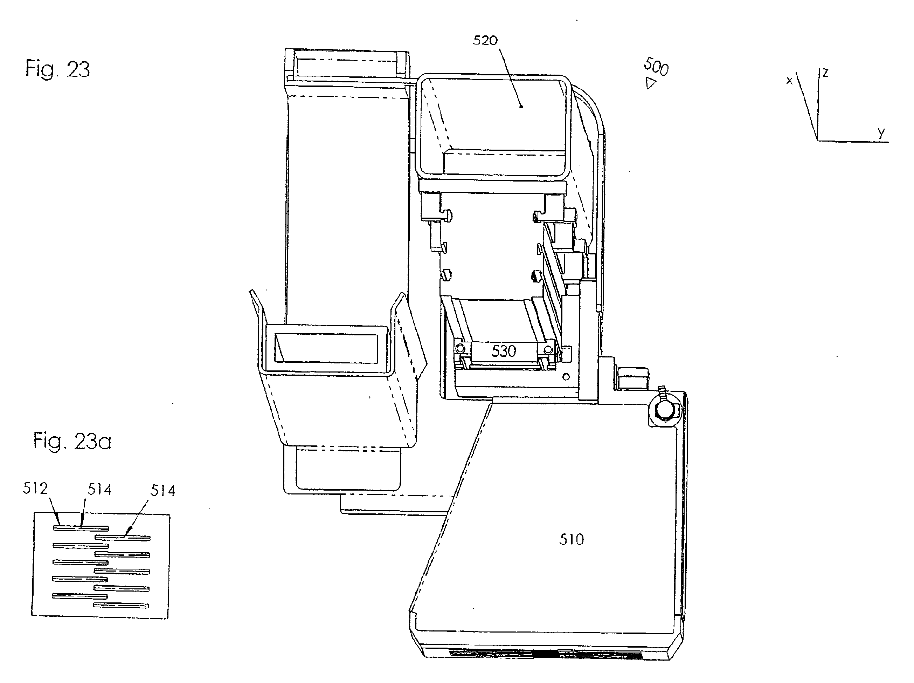

Die in den **Figuren 22** **und** **23** gezeigte Druckvorrichtung 500 weist einen langgestreckten horizontalen Druckkopf-Träger 520 auf, der entlang einer ersten Horizontalrichtung (= x-Richtung) über das Baufeld hin verfahrbar ist.

Ferner weist die Druckvorrichtung 500 einen an dem Träger 520 aufgehängten Druckkopf 510 auf, der mit einer Mehrzahl von Druckkopfdüsen 514 versehen ist zum gesteuerten Ausgeben von Harz auf die zu verfestigende Baumaterial-Schicht. Wie aus Figur 23a ersichtlich ist, hat der Druckkopf 510 eine Mehrzahl von Druckmodulen 512, welche in Druckkopf-Träger-Längsrichtung (x-Richtung) hintereinander in Reihe angeordnet sind und welche jeweils eine Vielzahl von Druckkopfdüsen 514 aufweisen, die in Druckkopf-Träger-Querrichtung (y-Richtung) hintereinander in Reihe angeordnet sind. Die Druckmodule 514 sind in zwei Druckmodul-Reihen angeordnet, die Module 512 der einen Reihe zu den Modulen 512 der anderen Reihe versetzt angeordnet sind.

Der Druckkopf 510 ist an einem Führungsschlitten 530 montiert, welcher an der Trägerunterseite des Druckkopf-Trägers 520 entlang der Druckkopf-Träger-Längsachse verfahrbar geführt ist, so dass der Druckkopf in x-Richtung verfahrbar ist und insgesamt mäanderförmig über das Baufeld verfahren werden kann. Der Druckkopf 510 ist unterhalb des Druckkopf-Trägers 520 angeordnet ist, wobei er den Träger 520 zumindest teilweise untergreift (siehe Figur 23). Der Massenschwerpunkt des Druckkopfes 510 befindet sich unter dem Druckkopf-Träger 520, bevorzugt auch unter dem Führungsschlitten 530.

Mit der oben beschriebenen Druckvorrichtung 500 kann ein von dem Druckkopf 510 erzeugtes Drehmoment um die Druckachse (= Druckkopf-Träger-Längsachse, x-Richtung) stark reduziert werden, wodurch einerseits eine Torsion des Druckkopf-Trägers 520 minimiert wird und somit die Stabilität und Schwingungsarmut des Druckkopfes 510 deutlich verbessert sind und wodurch andererseits Ausrichtfehler der Druckkopfdüsen 514 minimiert und daher die Druckqualität erhöht werden kann. Gleichzeitig werden eine gute Parallelität und ein definierter Abstand der Druckkopfunterseite zu der Oberseite der auf dem Baufeld zu bedruckenden Schicht sichergestellt. Dadurch können seinerseits die Anzahl der Druckkopfdüsen 514 bzw. Druckkopfmodule und folglich der Anlagendurchsatz deutlich erhöht werden, ohne dass hierunter die Qualität des herzustellenden Bauteils leidet. Weiter kann durch die Erhöhung der Stabilität und Schwingungsfestigkeit des Druckkopfes 510 der Abstand der Druckkopf-Unterseite zu der Oberseite der zu bedruckenden Schicht minimiert werden. Zudem können auf den Führungsschlitten 530 und dessen Führung an dem Druckkopf-Träger 520 einwirkende Kippmomente reduziert werden, so dass die Leichtgängigkeit des Führungsschlittens 530 des Druckkopfes insbesondere bei kleinen inkrementellen Bewegungen verbessert ist, was seinerseits zu einer Verbesserung der Druckqualität beiträgt. Des Weiteren kann die Anlage schmaler gebaut werden, da die Parkposition des Druckkopf-Trägers 520, in welcher der Druckkopf-Träger 520 zwischen zwei aufeinander folgenden Druckvorgängen geparkt ist, näher an das Baufeld heran gerückt werden kann, verglichen mit einer herkömmlichen Druckkopfvorrichtung, bei welcher der Druckkopf seitlich neben dem Druckkopf-Träger aufgehängt ist und daher von diesem in Horizontalrichtung wegragt.

### Beschichter-Reinigungsvorrichtung 600

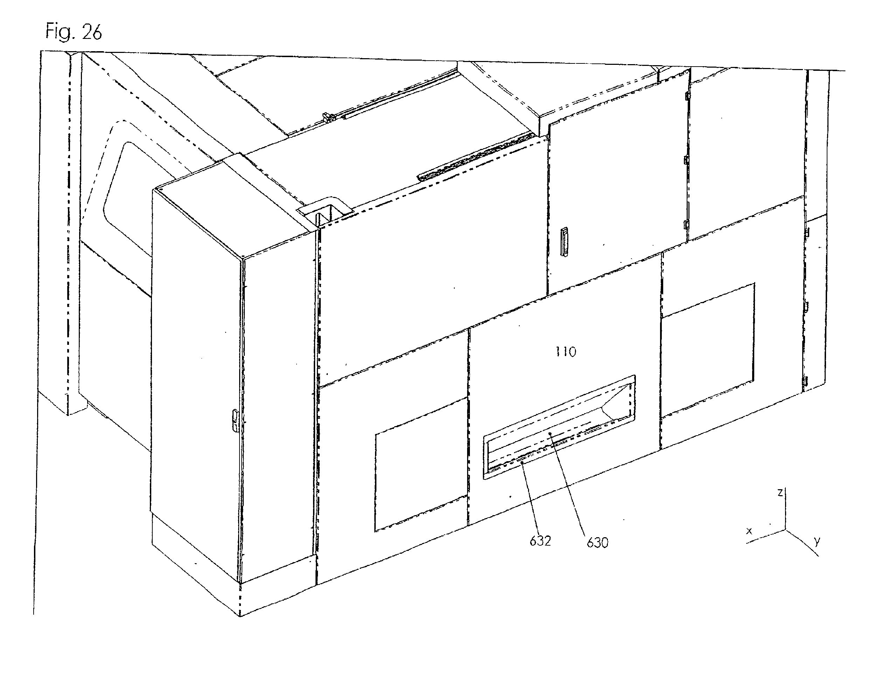

Die **Figuren 24 bis 26** zeigen eine Beschichter-Reinigungsvorrichtung 600 zum Reinigen des Dosierschachts 410 des oben beschriebenen Beschichters 400. Die Beschichter-Reinigungsvorrichtung 600 weist eine langgestreckte Bürste 610 auf, die unterhalb des Dosierschachts 410 des Beschichters 400 in einem Baumaterial-Auffangbehälter 620 aufgenommen ist. Die Länge der Bürste 610 ist mindestens so groß wie die Länge des Dosierschachts 410. Die Bürste 610 ist drehbar abgestützt und wird von einem Wischelement-Antrieb 612 drehbar angetrieben, der an die zentrale Steuereinrichtung angeschlossen ist. Die zentrale Steuereinrichtung steuert den gesamten Reinigungsprozess des Beschichters 400, d.h. das Verfahren des Beschichters 400 zu der Reinigungsvorrichtung 600 hin, die Drehbewegung der Bürste 610, sobald sich der Beschichter 400 in der Reinigungsposition befindet, und das Zurückfahren des Beschichters 400 in seine Parkposition nach der Reinigung. Die Steuereinrichtung kann eine Reinigung des Beschichters 400 z.B. nach einer vorbestimmten Anzahl von Beschichtungsfahrten oder in Abhängigkeit eines Sensorsignals veranlassen, welches anzeigt, ob ein Reinigen des Dosierschachts 410 erforderlich ist. Innerhalb des Baumaterial-Auffangbehälters 620 ist eine Umlenkplatte 622 derart angeordnet, dass Baumaterial, das mittels der Bürste 610 von dem Dosierschacht 410 abgestreift wird, von der Umlenkplatte 622 zu der Unterseite des Baumaterial-Auffangbehälters 620 abgelenkt wird. Der Baumaterial-Auffangbehälter 620 mündet in einen Speicher-Trichter für überschüssiges Baumaterial ein, und der Speicher-Trichter mündet in eine Speicher-Austrittswanne 630 ein. Die Speicher-Austrittswanne 630 steht über einen Schlitz mit einer Ausgabe-Öffnung 632 in Verbindung, welche in einer Außenwand des Anlagengehäuses 110 vorgesehen ist und durch die das in dem Speicher angesammelte Baumaterial während dem Bauprozess entnehmbar, z.B. absaugbar, ist.

### Druckkopf-Reinigungsvorrichtung 700

Das mit dem Druckkopf 510 aufzudruckende Harz ist stark viskos und kann unter gewissen Umständen an den Düsenöffnungen bzw. an der Druckkopfunterseite anhaften. Ebenso kann aufgewirbeltes Partikelmaterial an der Druckkopfunterseite anhaften. Um derartige Anhaftungen/Ablagerungen zu entfernen und die Druckkopf-Unterseite zu reinigen, ist die Druckkopf-Reinigungsvorrichtung 700 bereitgestellt.

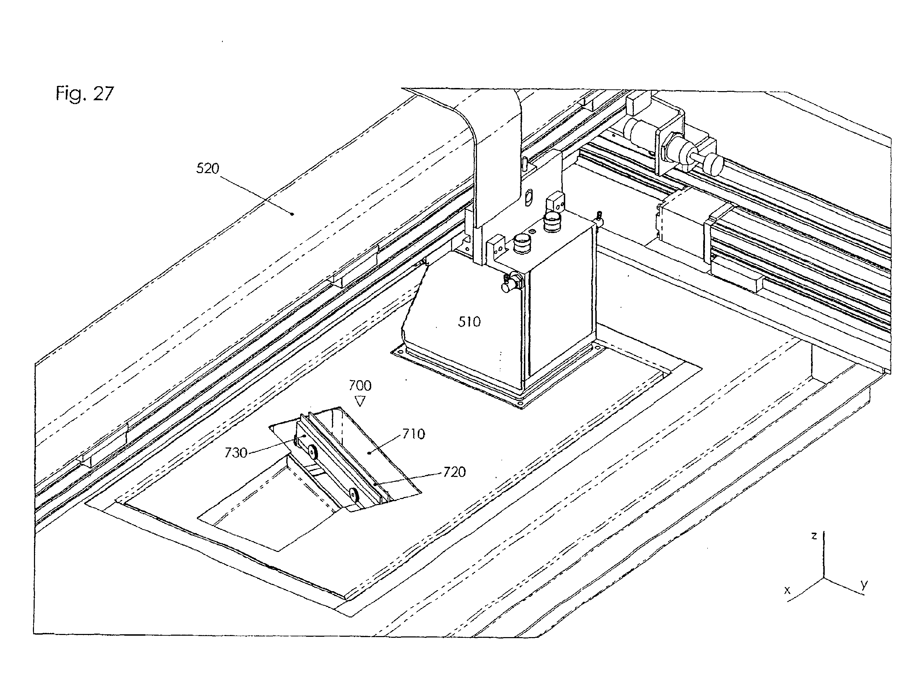

Die in den **Figuren 27 bis 29** gezeigte Reinigungsvorrichtung 700 weist einen Behälter mit einer wannenförmigen Vertiefung 710 auf, in der ein Reinigungsbad/Lösungsmittel (nicht gezeigt) aufgenommen ist. Zum zuführen und Abführen des Lösungsmittels sind an einem unteren Wannenabschnitt ein Zuführstutzen und ein Abführstutzen ausgebildet. Die Reinigungsvorrichtung 700 weist ferner zwei langgestreckte streifenförmige Wischlippen 720 auf, welche aus einem flexiblen Gummimaterial hergestellt sind. Die Wischlippen 720 erstrecken sich entlang der Wannenlängsrichtung und haben eine Länge die nur geringfügig kleiner ist als die der Wanne. Die beiden Wischlippen 720 sind von einem langgestreckten Trägerelement 730 gehalten. Das Trägerelement 730 weist einen im Querschnitt rechteckigen Halteteil auf, in dessen Oberseite zwei Längsnuten ausgebildet sind, in die die Wischlippen 720 eingesteckt sind. zudem sind die Wischlippen 720 durch jeweils zwei Schrauben seitlich fixiert, welche in eine Seitenfläche des Halteteils eingeschraubt sind. Das Halteteil ist über drei Schrauben an einer Welle befestigt. Die Welle ist an den beiden in Längsrichtung gegenüberliegenden Wandseiten der Wanne drehbar abgestützt. Die Drehbewegung der Welle wird von der zentralen Steuervorrichtung gesteuert.

Durch die gesteuerte Drehbewegung der Welle können die beiden Wischlippen 720 somit zwischen der in Figur 2 gezeigten Druckkopf-Reinigungsposition und der in Figur 3 gezeigten Wischlippen-Regenerationspositionen hin- und hergeschwenkt werden.

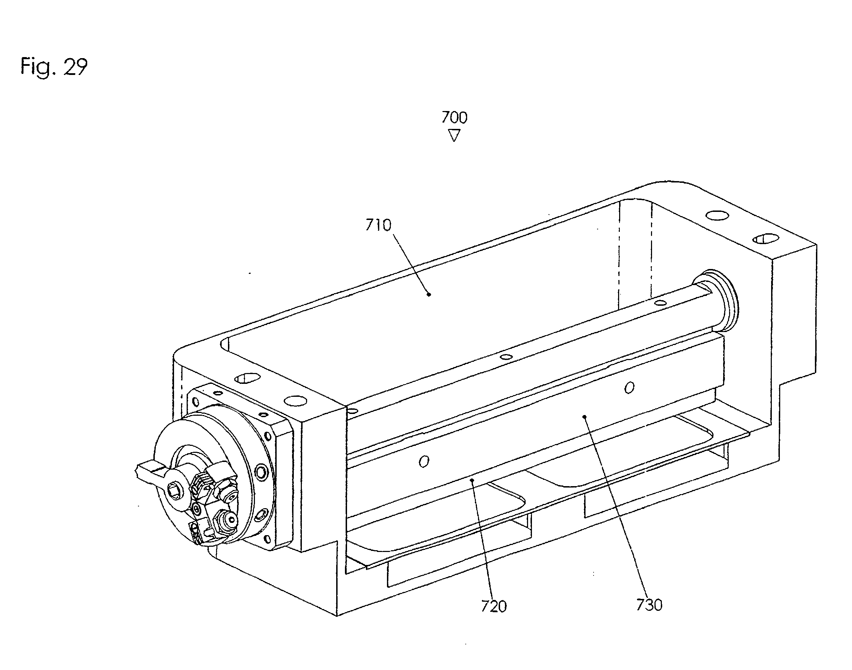

Dabei wird die Drehbewegung der Welle derart gesteuert, dass sich die beiden Wischlippen grundsätzlich in der in Figur 29 gezeigten Position befinden, in der die Wischlippen 720 in das Reinigungsbad eintauchen, so dass an den Wischlippen anhaftendes Bindemittel und Partikelmaterial in dem Reinigungsbad gelöst werden kann oder zumindest von den Wischlippen in das Bad übergeht, wodurch die Wischlippen 720 selbstständig gereinigt/regeneriert werden. Der Füllstand des Reinigungsbads in der Vertiefung 710 ist dabei bevorzugt derart gewählt, dass zumindest der aus dem Halteteil herausragende Wischlippenteil vollständig in das Reinigungsbad eintaucht.

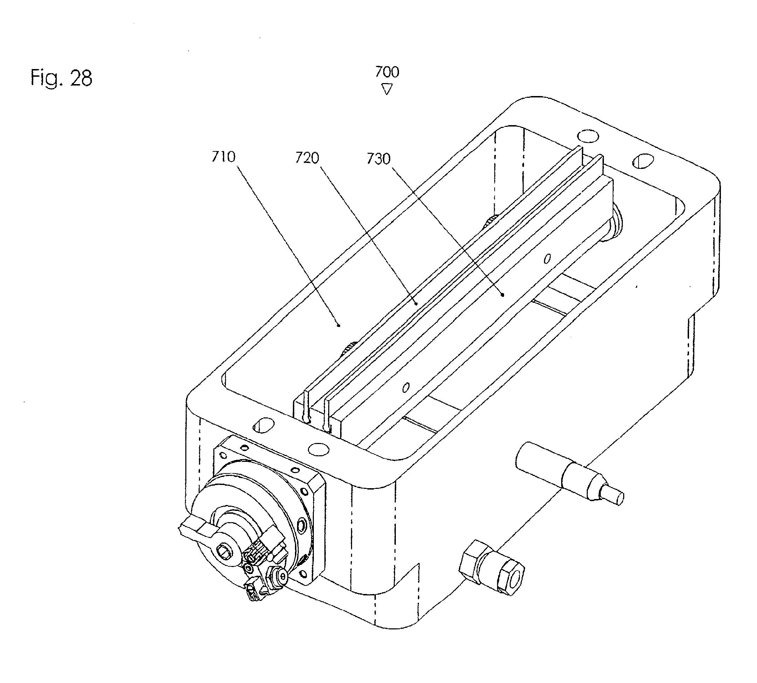

Nachdem eine vorbestimmte Anzahl von Druckfahrten absolviert wurde, veranlasst die Steuereinrichtung eine Drehbewegung der Welle um 180°, so dass die beiden Wischlippen 720 aus der in Figur 29 gezeigten Regenerationsposition in die in Figur 28 gezeigte Druckkopf-Reinigungsposition gebracht werden. Zudem steuert die Steuereinrichtung den Druckkopf 510 derart, dass dieser zu der Reinigungsvorrichtung 700 hin und (ggf. mehrmals) über diese hinweg fährt, wodurch seine Unterseite gereinigt wird.

Anschließend werden die Wischlippen 720 wieder in ihre Regenerationsposition bewegt und der gereinigte Druckkopf 510 in seine Parkposition gefahren.

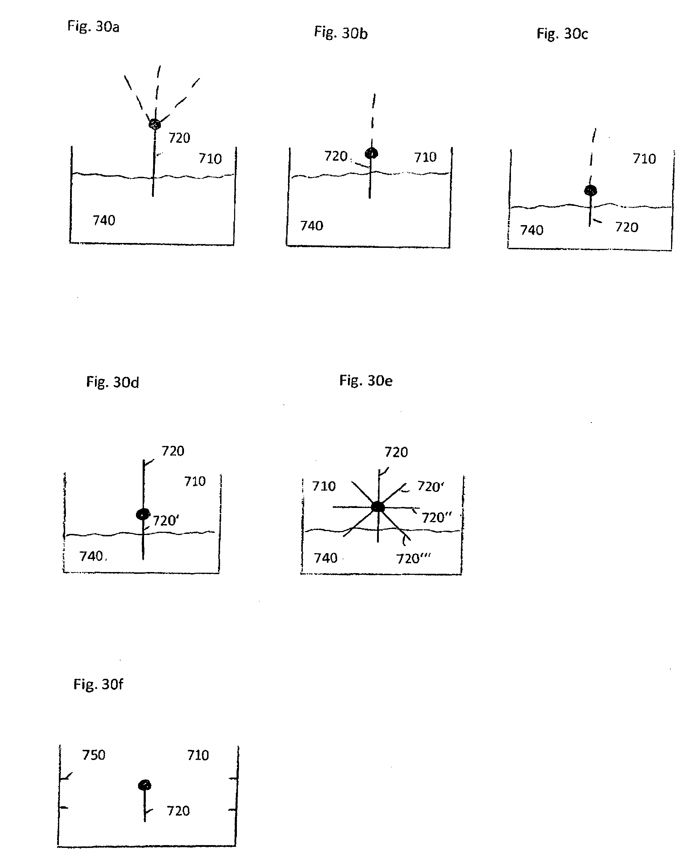

Wie in **Figur 30f** gezeigt (die Druckkopf-Reinigungsposition ist gestrichelt gezeichnet), können in der Wanne 710, insbesondere an den Seitenwänden der Wanne 710, mehrere Düsen 750 angeordnet sein, mit denen die beiden Wischlippen 720 in ihrer Regenerationsposition abgespritzt werden können. Die Düsen 710 können zusätzlich oder alternativ zu dem Reinigungsbad vorgesehen sein.

Weitere Ausführungsformen der Druckkopf-Reinigungsvorrichtung sind in den **Figuren 30a bis 30e** gezeigt, wobei die Druckkopf-Reinigungsposition gestrichelt gezeichnet ist.

## Patentansprüche

1. Anlage (100) zum schichtweisen Aufbau eines Formkörpers durch Ausbilden übereinander liegender Schichten von Baumaterial, aufweisend ein Partikelmaterial, auf einem Baufeld und durch selektives Verfestigen eines Teilbereichs der jeweiligen Baumaterial-Schicht vor dem Ausbilden der nächstfolgenden Schicht, aufweisend
eine Baubox (200) mit einer Vorderwand (220), einer Rückwand und zwei Seitenwänden (224, 226), welche einen nach oben offenen Bauboxinnenraum begrenzen, in welchem eine höhenverstellbare Bauplattform (210) aufgenommen ist und von dem über der Bauplattform (210) ein Baubereich definiert wird, in dem der Formkörper aufgebaut werden kann, wenn sich die Baubox (200) in einer Bauposition befindet, in welcher die Baubox (200) zum Aufbauen des Formkörpers in dem Rahmen (150) der Anlage (100) angeordnet ist, und
eine erste anlagenfeste Begrenzungsplatte (158), die eine horizontale Oberseite aufweist, von welcher entlang einer ersten Bauboxwand (224) der Bauboxwände eine den Baubereich teilweise umfangsseitig umgebende Baubereichsbegrenzung gebildet wird, wenn die Baubox in der
Baubox-Bauposition angeordnet ist,
**dadurch gekennzeichnet, dass** die erste Bauboxwand (224) im Bereich ihres oberen
Randes eine horizontale Randfläche (224c) aufweist, die in der Baubox-Bauposition von der ersten Begrenzungsplatte (158) unter Ausbildung eines zwischen der Unterseite der Begrenzungsplatte (158) und der horizontalen Randfläche (224c) angeordneten Spalts (s) wenigstens teilweise überlappt wird, wobei der Spalt (s) derart dimensioniert ist, dass außerhalb des Baubereichs eingebrachtes, überschüssiges Baumaterial sich in dem Spalt (s) totläuft.

2. Anlage (100) nach Anspruch 1, ferner aufweisend
eine zweite anlagenfeste Begrenzungsplatte (159), die eine horizontale Oberseite aufweist, von welcher in der Baubox-Bauposition entlang einer zweiten Bauboxwand (226) eine den Baubereich teilweise umfangsseitig umgebende Baubereichsbegrenzung gebildet wird,
wobei die zweite Bauboxwand (226) im Bereich ihres oberen Randes eine horizontale Randfläche aufweist, die in der Baubox-Bauposition von der zweiten Begrenzungsplatte (159) unter Ausbildung eines zwischen der Unterseite der Begrenzungsplatte (159) und der horizontalen Randfläche angeordneten Spalts (s) wenigstens teilweise überlappt wird, wobei der Spalt derart dimensioniert ist, dass außerhalb des Baubereichs eingebrachtes, überschüssiges Baumaterial sich in dem Spalt (s) totläuft.

3. Anlage (100) nach Anspruch 1 oder 2, wobei die jeweilige mit der horizontalen Randfläche (224c) versehene Bauboxwand (224, 226) im Bereich ihres oberen Randes ferner eine Stufe (224d) aufweist, welche in horizontaler Richtung zwischen der horizontalen Randfläche (224c) und dem Baubereich angeordnet ist und welche gegenüber der horizontalen Randfläche (224c) eine erhöhte Horizontalfläche ausbildet.

4. Anlage (100) nach Anspruch 3, wobei die von der Stufe gebildete erhöhte Horizontalfläche im Wesentlichen in Höhe der Oberseite der Begrenzungsplatte (158, 159) angeordnet ist.

5. Anlage (100) nach einem der vorangehenden Ansprüche, sofern auf Anspruch 2 rückbezogen, wobei die erste anlagenfeste Begrenzungsplatte (158) und die zweite anlagenfeste Begrenzungsplatte (159) gegenüberliegend angeordnet sind.

6. Anlage (100) nach Anspruch 5, ferner aufweisend einen Beschichter (400) und/oder eine Druckvorrichtung (500), welche in horizontaler Bewegungsrichtung verfahrbar sind, wobei sich die beiden anlagenfesten Begrenzungsplatten (158, 159) senkrecht zu der jeweiligen Bewegungsrichtung erstrecken.

7. Anlage (100) nach einem der Ansprüche 1 bis 6, wobei die Baubox (200) eine horizontale erste Abdeckungsplatte (232) aufweist, von welcher entlang einer dritten Bauboxwand, die benachbart zu der ersten Bauboxwand (224) angeordnet ist, eine den Baubereich teilweise umfangsseitig umgebende Baubereichsbegrenzung gebildet wird.

8. Anlage (100) nach Anspruch 7, wobei die Baubox (200) eine horizontale zweite Abdeckungsplatte (230) aufweist, von welcher entlang einer vierten Bauboxwand (220), die benachbart zu der ersten Bauboxwand (224) angeordnet ist und die der dritten Bauboxwand gegenüberliegt, eine den Baubereich teilweise umfangsseitig umgebende Baubereichsbegrenzung gebildet wird.

9. Anlage (100) nach einem der Ansprüche 1 bis 8, wobei die Baubox (200) rechteckig ausgebildet ist mit langen Seitenwänden (224, 226), einer kurzen Vorderwand (220) und einer kurzen Rückwand, und wobei die jeweilige die Randfläche aufweisende Bauboxwand (224, 226) eine der beiden Seitenwände (224, 226) ist.

10. Anlage (100) nach einem der Ansprüche 1 bis 9, wobei die Baubox (200) aus der Baubox-Bauposition in eine zusätzliche Position, in der die Baubox (200) außerhalb des Rahmens (150) der Anlage angeordnet ist, verfahrbar ist.

11. Anlage (100) nach Anspruch 10, wobei die Baubox (200) auf einem Schienensystem (140) angeordnet ist.

12. Anlage (100) nach Anspruch 10 oder 11, wobei die Baubox (200) einen eigenen Baubox-Fahrantrieb (250) aufweist zum Verfahren der Baubox (200) zwischen der Baubox-Bauposition und der zusätzlichen Position.

13. Anlage (100) nach einem der Ansprüche 10 bis 12, ferner aufweisend ein Bauboxfixierungssystem zum Ausrichten der Baubox (200) in Baubox-Fahrtrichtung und zum Fixieren der Baubox (200) an dem Rahmen (150), wenn die Baubox (200) in ihrer Bauposition ist, wobei das Bauboxfixierungssystem ein anlagenseitiges Ausrichtelement (152), das senkrecht zur Verfahrrichtung der Baubox verstellbar ist, mit einem sich verjüngenden Endabschnitt sowie eine bauboxseitige sich verjüngende Ausricht-Vertiefung (226b) aufweist, welche an einer der Bauboxwände (221, 223, 224, 226) ausgebildet ist und in welche der sich verjüngende Endabschnitt des anlagenseitigen Ausrichtelements (152) in der Baubox-Bauposition eingreift.

## Claims

1. A device (100) for the layered construction of a shaped body by forming layers of construction material, comprising a particulate material, lying one upon another on a construction field, and by selectively solidifying a partial area of the respective construction material layer prior to forming the next layer, comprising:
a construction box (200) having a front wall (220), a rear wall and two side walls (224, 226), which delimit a construction box interior space which is open to the upper side, in which a height-adjustable construction platform (210) is received and by which a construction area is defined above the construction platform (210), in which the shaped body can be constructed when the construction box (200) is in a construction position in which the construction box (200) is arranged in the frame (150) of the device (100) for constructing the shaped body, and
a first device-fixed boundary plate (158) comprising a horizontal upper side by which along a first construction box wall (224) of the construction box walls a construction area boundary is formed, surrounding the construction area in part circumferentially, when the construction box is located in the construction box construction position,
**characterized in that** the first construction box wall (224) comprises a horizontal edge surface (224c) in the area of its upper edge, which in the construction box construction position is at least partially overlapped by the first boundary plate (158) by forming a gap (s) located between the lower side of the boundary plate (158) and the horizontal edge surface (224c), the gap (s) being dimensioned such that excessive construction material brought-in outside the construction area stops running within the gap (s).

2. The device (100) according to claim 1, further comprising
a second device-fixed boundary plate (159) comprising a horizontal upper side by which in the construction box construction position a construction area boundary is formed along a second construction box wall (226), surrounding the construction area in part circumferentially,
wherein the second construction box wall (226) comprises in the area of its upper edge a horizontal edge surface which in the construction box construction position is at least partially overlapped by the second boundary plate (159) by forming a gap (s) located between the lower side of the boundary plate (159) and the horizontal edge surface, the gap being dimensioned such that excessive construction material brought-in outside the construction area stops running within the gap (s).

3. The device (100) according to claim 1 or 2, wherein the respective construction box wall (224, 226) provided with the horizontal edge surface (224c) further comprises a step (224d) in the area of its upper edge, which is located in a horizontal direction between the horizontal edge surface (224c) and the construction area, and which forms an elevated horizontal surface relative to the horizontal edge surface (224c).

4. The device (100) according to claim 3, wherein the elevated horizontal surface formed by the step is substantially located on the level of the upper side of the boundary plate (158, 159).

5. The device (100) according to any of the preceding claims inasmuch as related to claim 2, wherein the first device-fixed boundary plate (158) and the second device-fixed boundary plate (159) are located opposite each other.

6. The device (100) according to claim 5, further comprising a coating device (400) and/or a printing device (500), which is/are movable in a horizontal moving direction, the two device-fixed boundary plates (158, 159) extending perpendicularly to the respective moving direction.

7. The device (100) according to any of claims 1 to 6, the construction box (200) comprising a horizontal first cover plate (232) by which along a third construction box wall located adjacent to the first construction box wall (224) a construction area boundary is formed surrounding the construction area in part circumferentially.

8. The device (100) according to claim 7, wherein the construction box (200) comprises a horizontal second cover plate (230) by which along a fourth construction box wall (220) located adjacent to the first construction box wall (224) and being located opposite the third construction box wall a construction box boundary is formed surrounding the construction area in part circumferentially.

9. The device (100) according to any of claims 1 to 8, wherein the construction box (200) is formed to be rectangular, having long side walls (224, 226), a short front wall (220) and a short rear wall, and wherein the respective construction box wall (224, 226) comprising the edge surface is one of the two side walls (224, 226).

10. The device (100) according to any of claims 1 to 9, wherein the construction box (200) is movable from the construction box construction position into an additional position in which the construction box (200) is located outside the frame (150) of the device.

11. The device (100) according to claim 10, wherein the construction box (200) is located on a rail system (140).

12. The device (100) according to claim 10 or 11,
wherein the construction box (200) comprises its own construction box travel drive (250) for moving the construction box (200) between the construction box construction position and the additional position.

13. The device (100) according to any of claims 10 to 12, further comprising a construction box fixing system for aligning the construction box (200) in a construction box travel direction and for fixing the construction box (200) to the frame (150), when the construction box (200) is in its construction position, wherein the construction box fixing system comprises a device-sided alignment member (152) adjustable perpendicular to the moving direction of the construction box and having a tapered end portion, and a construction box-sided tapered alignment recess (226b) which is formed on one of the construction box walls (221, 223, 224, 226) and into which the tapered end portion of the device-sided alignment member (152) engages in the construction box construction position.

## Revendications

1. Installation (100) pour la structuration par couches d'un corps moulé par réalisation de couches superposées d'un matériau de construction comprenant un matériau particulaire sur un site de construction, et par solidification sélective d'une zone partielle de chaque couche de matériau de construction avant réalisation de la couche suivante, comprenant
une caisse de construction (200) avec une paroi avant (220), une paroi arrière et deux parois latérales (224, 226) qui délimitent un intérieur de caisse de construction ouvert vers le haut, dans laquelle est logée une plate-forme de construction (210) de hauteur réglable et par lequel une zone de construction est définie au-dessus de la plate-forme de construction (210), dans laquelle le corps moulé peut être structuré quand la caisse de construction (200) se trouve dans une position de construction où la caisse de construction (200) est disposée dans le cadre de construction (150) de l'installation (100) pour la structuration du corps moulé, et
une première plaque de délimitation (158) fixe dans l'installation, qui présente une face supérieure horizontale par laquelle est formée, le long d'une première paroi (224) parmi les parois de la caisse de construction, une délimitation de la zone de construction entourant en partie périphériquement la zone de construction, quand la caisse de construction est en position de construction,
**caractérisée en ce que**
la première paroi (224) de caisse de construction présente au niveau de son bord supérieur une surface de bord horizontale (224c) qui est au moins partiellement recouverte par la première plaque de délimitation (158) dans la position de construction de la caisse, en formant une fente (s) ménagée entre la face inférieure de la plaque de délimitation (158) et la surface de bord horizontale (224c), la fente (s) étant dimensionnée de telle manière que le matériau excédentaire appliqué à l'extérieur de la zone de construction est recueilli dans la fente (s).

2. Installation (100) selon la revendication 1, comprenant en outre une deuxième plaque de délimitation (159) fixe dans l'installation, qui présente une face supérieure horizontale par laquelle est formée, le long d'une deuxième paroi (226) de caisse de construction, une délimitation de la zone de construction entourant en partie périphériquement la zone de construction dans la position de construction de la caisse,
dans laquelle la deuxième paroi de caisse de construction (226) présente au niveau de son bord supérieur une surface de bord horizontale qui est au moins partiellement recouverte par la deuxième plaque de délimitation (159) dans la position de construction de la caisse, en formant une fente (s) ménagée entre la face inférieure de la plaque de délimitation (159) et la surface de bord horizontale, la fente (s) étant dimensionnée de telle manière que le matériau excédentaire appliqué à l'extérieur de la zone de construction est recueilli dans la fente (s).

3. Installation (100) selon la revendication 1 ou 2, dans laquelle la paroi (224, 226) de caisse de construction pourvue de la surface de bord horizontale (224c) présente en outre au niveau de son bord supérieur un gradin (224d) disposé entre la surface de bord horizontale (224c) et la zone de construction dans la direction horizontale, et qui forme une surface horizontale surélevée par rapport à la surface de bord horizontale (224c).

4. Installation (100) selon la revendication 3, dans laquelle la surface horizontale surélevée formée par le gradin est située sensiblement au niveau de la face supérieure de la plaque de délimitation (158, 159).

5. Installation (100) selon l'une des revendications précédentes, si celle-ci se rapporte à la revendication 2, dans laquelle la première plaque de délimitation (158) fixe dans l'installation et la deuxième plaque de délimitation (159) fixe dans l'installation sont disposées opposées l'une à l'autre.

6. Installation (100) selon la revendication 5, comportant en outre un dispositif de revêtement (400) et/ou un dispositif de pression (500) mobiles dans une direction horizontale de déplacement, les deux plaques de délimitation (158, 159) fixes dans l'installation s'étendant perpendiculairement à la direction de déplacement.

7. Installation (100) selon l'une des revendications 1 à 6, dans laquelle la caisse de construction (200) comporte une première plaque de couverture (232) horizontale, par laquelle est formée une délimitation de zone de construction entourant en partie périphériquement la zone de construction, le long d'une troisième paroi de caisse de construction adjacente à la première paroi (224) de caisse de construction.

8. Installation (100) selon la revendication 7, dans laquelle la caisse de construction (200) comporte une deuxième plaque de couverture (230) horizontale, par laquelle est formée une délimitation de zone de construction entourant en partie périphériquement la zone de construction, le long d'une quatrième paroi (220) de caisse de construction adjacente à la première
paroi (224) de caisse de construction et opposée à la troisième paroi de caisse de construction.

9. Installation (100) selon l'une des revendications 1 à 8, dans laquelle la caisse de construction (200) est en forme de parallélépipède avec de longues parois latérales (224, 226), une courte paroi avant (220) et une courte paroi arrière, et dans laquelle la paroi de caisse de construction (224, 226) présentant la surface de bord est une des deux parois latérales (224, 226).

10. Installation (100) selon l'une des revendications 1 à 9, dans laquelle la caisse de construction (200) peut être déplacée de la position de construction de la caisse vers une position complémentaire, où la caisse de construction (200) est disposée à l'extérieur du cadre de construction (150) de l'installation.

11. Installation (100) selon la revendication 10, dans laquelle la caisse de construction (200) est disposée sur un système de rails (140).

12. Installation (100) selon la revendication 10 ou 11, dans laquelle la caisse de construction (200) comporte son propre entraînement de marche (250) de caisse de construction, permettant de déplacer la caisse de construction (200) entre la position de construction de la caisse et la position complémentaire.

13. Installation (100) selon l'une des revendications 10 à 12, comportant en outre un système de fixation de caisse de construction permettant d'orienter la caisse de construction (200) dans la direction de déplacement de caisse et de fixer la caisse de construction (200) sur le cadre de construction (150) quand la caisse de construction (200) est dans sa position de construction, dans laquelle le système de fixation de la caisse de construction comporte un élément d'orientation (152) côté installation, réglable perpendiculairement à la direction de déplacement de la caisse de construction, avec une partie d'extrémité amincie ainsi qu'un évidement d'orientation (226b) aminci côté caisse, ménagé sur une des parois (221, 223, 224, 226) de la caisse de construction, et où s'engage la partie d'extrémité amincie de l'élément d'orientation (152) côté installation en position de construction de la caisse.
